# EUROPÄISCHE PATENTSCHRIFT

(11) **EP 2 880 757 B1**
(45) Veröffentlichungstag und Bekanntmachung des Hinweises auf die Patenterteilung: **14.03.2018**
(21) Anmeldenummer: 13756834.1
(22) Anmeldetag: 01.08.2013
(51) Int. Cl.: H02P 21/00, H02P 9/10, H02P 27/04

(54) **STEUERUNGSVORRICHTUNG FÜR EINEN ROTORBLATTVERSTELLANTRIEB EINER WINDKRAFTANLAGE**
CONTROL DEVICE FOR A ROTOR BLADE SERVO DRIVE OF A WIND TURBINE
DISPOSITIF DE COMMANDE D'UN MÉCANISME DE RÉGLAGE DES PALES DE ROTOR D'UNE ÉOLIENNE

(30) Priorität: 02.08.2012 DE 102012107065
(43) Veröffentlichungstag der Anmeldung: 10.06.2015
(73) Patentinhaber: SSB Wind Systems GmbH & Co. KG, 48499 Salzbergen (DE)
(72) Erfinder: WIBBEN, Norbert, 48499 Salzbergen (DE); UPSING, Josef, 48432 Rheine (DE); BUELTEL, Tobias, 48431 Rheine (DE)
(86) Internationale Anmeldenummer: PCT/EP2013/066174
(87) Internationale Veröffentlichungsnummer: WO 2014/020107

(56) Entgegenhaltungen:
- DE-A1-102010 021 488
- DE-C1- 19 615 095
- US-A1- 2009 284 195
- US-A1- 2012 068 639

## Beschreibung

Die Erfindung betrifft eine Steuerungsvorrichtung mit einem einen Ständer und einen relativ zu diesem bewegbaren Läufer umfassenden Elektromotor, einer Regeleinheit, mittels welcher die Geschwindigkeit des Läufers in Abhängigkeit von einer Sollgeschwindigkeit regelbar ist, und einer Feldschwächungseinheit, mittels welcher in einem oberen Geschwindigkeitsbereich eine Feldschwächung in Abhängigkeit von der Geschwindigkeit und im Teillastbetrieb des Elektromotors in einem unter dem oberen Geschwindigkeitsbereich liegenden Grundgeschwindigkeitsbereich eine Feldschwächung in Abhängigkeit von einer aktuellen Belastung des Läufers herbeiführbar ist.

Die DE 196 15 095 C1 offenbart ein Verfahren zur drehmomentabhängigen Flusssollwertführung im Teillastbereich für eine Gruppe von parallel geschalteten Drehstrom-Asynchronmotoren, die von einem Umrichter gespeist werden, wobei der Flusssollwert so gebildet wird, dass das Verhältnis von Sollmoment bzw. Istmoment der Motorgruppe und Flusssollwert dem Verhältnis von Bemessungsmoment und Bemessungsfluss entspricht.

Die DE 10 2010 021 488 A1 beschreibt ein Verfahren zur Steuerung bzw. Regelung einer Asynchronmaschine, mit den Verfahrensschritten: a) Vorgabe und Einprägen eines mit einer Drehfeldfrequenz drehenden Spannungsvektors, wobei sowohl die Drehfeldfrequenz als auch der Spannungsvektor mit einer auf einer beliebig ausgeführten Spannungs-Frequenz-Kennlinie basierenden Steuerung oder Regelung ermittelt und der Spannungsvektor über eine cos (ϕ)-Regelung angepasst wurde; b) Berechnung von Sollwerten des cos (ϕ) anhand von Typenschild- und Ersatzschaltbilddaten für einen verlustoptimalen oder verlustoptimierten Betrieb der Asynchronmaschine; c) Ermittlung eines Istwert des cos (ϕ) anhand des eingeprägten Spannungsvektors und eines Stromvektors oder anhand der Wirk- und Scheinleistung; d) Berechnung der Differenz zwischen dem Sollwert und dem Istwert des cos (ϕ) sowie Speisung einer beliebig ausgeführten Regelung auf cos (ϕ) mit dieser Eingangsdifferenz; e) Berechnung und Begrenzung eines Stellwerts des Reglers für cos (ϕ) und Anpassung des Spannungsvektors über den Stellwert der Regelung auf cos (ϕ).

In Windkraftanlagen werden zur Regelung der Rotorblattposition Antriebe mit entsprechenden Umrichtern als Pitchantriebssysteme eingesetzt. Die Antriebssysteme können dabei auf Wechselstrombasis, bestehend aus Frequenzumrichter (mit oder ohne vektororientierter Regelung) und Drehstrommaschine (z.B. Asynchronmaschine), oder in anderen denkbaren elektrischen Ausprägungen ausgeführt sein. Die eingesetzten Umrichter werden in Achsschränken eingebaut, in denen auch andere Komponenten des Pitchsystems untergebracht sind. Alternativ können die Antriebe auch so gestaltet sein, dass die Umrichter mechanisch an die Motoren angebaut sind, wobei auf den zusätzlichen Achsschrank verzichtet wird. Eine übergeordnete Steuerung ermittelt u.a. aus aktuellen Anlagen- und Einsatzbedingungen die notwendige Position der Rotorblätter, und gibt diese über einen Kommunikationsbus als Sollwert für die verschiedenen Achsen vor. Im Umrichter des Pitchantriebes wird über eine Kaskadenregelung für Position, Drehzahl und Strom die Ansteuerung der Antriebsmaschine geregelt, wodurch der Strom das benötigte Abtriebsmoment erzeugt.

Die übliche Vektorregelung (auch feldorientierte Regelung genannt) der Asynchronmaschine wird derart realisiert, dass die Magnetisierung der Maschine in einem Bereich, in dem keine Feldschwächung im herkömmlichen Sinn erforderlich ist, auf konstante Nennmagnetisierung gesteuert wird. Feldschwächung im herkömmlichen Sinn ist erforderlich, wenn die Drehzahl über den Nennpunkt (insbesondere Nenndrehzahl) hinaus erhöht und dabei das Frequenz-Spannungs-Verhältnis des Motors nicht eingehalten werden kann. Je nach benötigtem Drehmoment wird der Wirkstrom abhängig vom übergeordneten Drehzahlregler, unter Berücksichtigung der zulässigen Gerätestromgrenze geregelt. Hieraus resultiert, dass der Magnetisierungsstrom unabhängig von der tatsächlich benötigten Abtriebsleistung der Maschine permanent über den Umrichter bereitgestellt wird. Dies bedeutet, dass im Teillastbetrieb der Asynchronmaschine Strom fließt, der aktuell in der Höhe nicht benötigt wird, was somit zur unnötigen Erwärmung des Umrichters, der Maschine und des gesamten Pitchsystems führt. Ferner werden Backup-Systeme (wie z.B. Akkumulatoren) durch nicht benötigte Energieentnahme stärker zyklisch belastet, da der eigentlich nicht benötigte aber entnommene Energiegehalt wieder zugeführt werden muss.

Ausgehend hiervon liegt der Erfindung die Aufgabe zugrunde, eine Möglichkeit zur Steuerung eines Elektromotors zu schaffen, womit eine unnötige thermische Belastung des Elektromotors und/oder von Bauelementen zur Ansteuerung desselben vermieden oder zumindest reduziert werden kann.

Diese Aufgabe wird erfindungsgemäß mit einer Steuerungsvorrichtung nach Anspruch 1 gelöst. Bevorzugte Ausgestaltungen und Weiterbildungen der Erfindung sind in den Unteransprüchen und in der nachfolgenden Beschreibung gegeben.

Die erfindungsgemäße Steuerungsvorrichtung, insbesondere für einen Rotorblattverstellantrieb einer Windkraftanlage, weist einen einen Ständer und einen relativ zu diesem bewegbaren Läufer umfassenden Elektromotor, eine Regeleinheit, mittels welcher die Geschwindigkeit des Läufers in Abhängigkeit von einer Sollgeschwindigkeit regelbar ist, und eine Feldschwächungseinheit auf, mittels welcher in einem oberen Geschwindigkeitsbereich eine Feldschwächung in Abhängigkeit von der Geschwindigkeit herbeiführbar ist, wobei im Teillastbetrieb des Elektromotors mittels der Feldschwächungseinheit in einem unter dem oberen Geschwindigkeitsbereich liegenden Grundgeschwindigkeitsbereich eine Feldschwächung in Abhängigkeit von einer aktuellen Belastung des Läufers herbeiführbar ist. Die Steuerungsvorrichtung kann auch als Antriebssteuerungsvorrichtung oder Motorsteuerungsvorrichtung bezeichnet werden.

Durch die vorgenannte Feldschwächung im Teillastbetrieb ist es möglich, die Aufnahme benötigter Energie passend zur erforderlichen Belastung des Elektromotors zu regeln, sodass ein unnötiger Energieverbrauch verhindert oder zumindest reduziert wird. Insbesondere ist eine lastabhängige Regelung des feldbestimmenden Magnetisierungsstroms möglich, sodass eine energieeffiziente Regelung des Elektromotors erzielbar ist. Da ein Rotorblattverstellantrieb über einen Großteil seiner Betriebszeit im Teillastbetrieb arbeitet, kann die thermische Belastung des Elektromotors und zugehöriger Bauelemente (wie z.B. Umrichter) erheblich reduziert werden. Insbesondere ist eine Reduzierung der thermischen Belastung des gesamten Rotorblattverstellsystems (Pitchsystem) möglich, sodass eine verbesserte Lebensdauer und ggf. sogar eine höhere Funktionssicherheit des Pitchsystems erzielbar sind. Ferner führt die angepasste Energieaufnahme bei Netzausfall zu einer längeren Nutzungsdauer elektrischer Energiespeicher eingesetzter Notstromversorgungseinrichtungen, da auch der benötigte Blindstrom letztlich zu Kupfer- und Eisenverlusten führt, die wieder ausgeglichen werden müssen. Somit kann die Lebensdauer der Energiespeicher durch eine geringere zyklische Belastung erhöht werden. Bei den Energiespeichern handelt es sich z.B. um Akkumulatoren oder Kondensatoren.

Unter dem Begriff "Feld" wird insbesondere das oder ein Magnetfeld des Elektromotors verstanden, vorzugsweise das magnetische Läuferfeld und/oder das magnetische Luftspaltfeld und/oder das magnetische Erregerfeld des Elektromotors. Unter dem Begriff "Feldschwächung" wird insbesondere die Schwächung des Felds verstanden, vorzugsweise die Verringerung der magnetischen Flussdichte und/oder der magnetischen Feldstärke und/oder des magnetischen Flusses des Felds. Bevorzugt wird unter dem Begriff "Feldschwächung" die Reduzierung des magnetischen Läuferflusses und/oder des magnetischen Luftspaltflusses und/oder des magnetischen Erregerflusses des Elektromotors verstanden.

Bei der Geschwindigkeit des Läufers handelt es sich bevorzugt um eine Geschwindigkeit des Läufers relativ zum Ständer. Bei der Belastung des Läufers handelt es sich vorzugsweise um eine mechanische Belastung. Insbesondere entspricht die Belastung einem von dem Läufer abgegebenen Drehmoment und/oder einer von dem Läufer abgegebenen Kraft und/oder einer von dem Läufer abgegebenen mechanischen Leistung.

Unter Teillastbetrieb wird insbesondere ein Betrieb des Elektromotors verstanden, bei welchem die Belastung des Läufers, vorzugsweise die vom Läufer abgegebene mechanische Leistung und/oder das vom Läufer abgegebene Drehmoment und/oder die vom Läufer abgegebene Kraft, auch bei schwächerem Feld, vorzugsweise bei reduziertem Läuferfluss und/oder bei reduziertem Luftspaltfluss und/oder bei reduziertem Erregerfluss, abgebbar wären. Unter Volllastbetrieb wird insbesondere ein Betrieb des Elektromotors verstanden, bei welchem die Belastung des Läufers, vorzugsweise die vom Läufer abgegebene mechanische Leistung und/oder das vom Läufer abgegebene Drehmoment und/oder die vom Läufer abgegebene Kraft, ein vorgegebenes Maximalfeld, vorzugsweise einen vorgegebenen maximalen Läuferfluss und/oder einen vorgegebenen maximalen Luftspaltfluss und/oder einen vorgegebenen maximalen Erregerfluss, erfordert oder zumindest näherungsweise erfordert. Bei einer Feldschwächung ist das Feld vorzugsweise schwächer als das Maximalfeld. Insbesondere ist bei einer Feldschwächung der Läuferfluss kleiner als der maximale Läuferfluss und/oder der Luftspaltfluss kleiner als der maximale Luftspaltfluss und/oder der Erregerfluss kleiner als der maximale Erregerfluss.

Der Grundgeschwindigkeitsbereich erstreckt sich bevorzugt bis zu einer vorgegebenen Nenngeschwindigkeit des Elektromotors. Insbesondere bildet die Nenngeschwindigkeit eine obere Grenze des Grundgeschwindigkeitsbereichs. Vorzugsweise schließt der Grundgeschwindigkeitsbereich die Nenngeschwindigkeit mit ein. Der obere Geschwindigkeitsbereich liegt insbesondere über der Nenngeschwindigkeit.

Mittels der Feldschwächung im oberen Geschwindigkeitsbereich ist bevorzugt eine Eisensättigung des Elektromotors vermeidbar und/oder die Geschwindigkeit des Elektromotors erhöhbar, insbesondere über die Nenngeschwindigkeit. Die Feldschwächung wird im oberen Geschwindigkeitsbereich vorteilhaft mit zunehmender Geschwindigkeit des Läufers verstärkt. Insbesondere ist der Läuferfluss und/oder der Luftspaltfluss und/oder der Erregerfluss mittels der Feldschwächungseinheit im oberen Geschwindigkeitsbereich umgekehrt proportional zur Geschwindigkeit des Läufers haltbar und/oder umgekehrt proportional zur Geschwindigkeit des Läufers steuerbar.

Der Elektromotor kann ein Gleichstrommotor oder ein Wechselstrommotor sein. Ferner kann der Elektromotor ein Linearmotor sein, sodass der Läufer insbesondere zu dem Ständer verschiebbar ist. Bevorzugt ist der Elektromotor ein Wanderfeldmotor oder ein Drehstrommotor, beispielsweise ein Asynchronmotor oder ein Synchronmotor. Vorzugsweise ist der Elektromotor ein Asynchronmotor in Form eines Käfig- oder Kurzschlussläufers.

Bevorzugt bildet der Elektromotor einen rotierenden oder rotatorischen Elektromotor. Vorzugsweise ist der Läufer relativ zu dem Ständer drehbar. In diesem Fall handelt es sich bei der Geschwindigkeit des Läufers insbesondere um eine Winkelgeschwindigkeit. Da die Winkelgeschwindigkeit des Läufers durch dessen Drehzahl beschrieben werden kann, ist es möglich, den Begriff "Geschwindigkeit" durch den Begriff "Drehzahl" zu ersetzen. In diesem Sinne werden die Begriffe "Geschwindigkeit" und "Drehzahl" bei einem Elektromotor mit einem relativ zu dem Ständer drehbaren und/oder drehenden Läufer insbesondere synonym verwendet.

Bevorzugt ist eine Geschwindigkeitserfassungseinheit vorgesehen, mittels welcher die aktuelle Geschwindigkeit des Läufers ermittelbar ist. Beispielsweise umfasst die Geschwindigkeitserfassungseinheit einen Geschwindigkeitssensor, z.B. einen Drehgeber und/oder einen Drehzahlgeber, mittels welchem die aktuelle Geschwindigkeit erfassbar ist, oder einen auf einem mathematischen Modell basierenden Geschwindigkeitsestimator, mittels welchem die aktuelle Geschwindigkeit abschätzbar ist. Vorteilhaft ist eine Geschwindigkeitsvergleichseinheit vorgesehen, mittels welcher eine Geschwindigkeitsabweichung der aktuellen Geschwindigkeit von der Sollgeschwindigkeit (Geschwindigkeitssollwert) ermittelbar ist, vorzugsweise durch Subtraktion der aktuellen Geschwindigkeit von der Sollgeschwindigkeit oder umgekehrt. Die Geschwindigkeitserfassungseinheit ist bevorzugt mit dem Läufer gekoppelt. Die Sollgeschwindigkeit ist insbesondere vorgegeben. Die aktuelle Geschwindigkeit ist bevorzugt der Feldschwächungseinheit und/oder der Geschwindigkeitsvergleichseinheit zuführbar, insbesondere mittels der Geschwindigkeitserfassungseinheit. Bevorzugt ist die Sollgeschwindigkeit der Geschwindigkeitsvergleichseinheit zuführbar. Vorteilhaft ist die Geschwindigkeitsabweichung der Regeleinheit und/oder der Feldschwächungseinheit zuführbar, vorzugsweise mittels der Geschwindigkeitsvergleichseinheit. Die Regeleinheit umfasst oder bildet bevorzugt einen Geschwindigkeitsregler, der vorzugsweise ein PI-Regler ist. Insbesondere kann die Regeleinheit als Geschwindigkeitsregeleinheit bezeichnet werden.

Gemäß einer Ausgestaltung ist der Läufer relativ zu dem Ständer drehbar, wobei die Regeleinheit eine Drehzahlregeleinheit bildet, die Geschwindigkeit durch eine Drehzahl gegeben ist, die Sollgeschwindigkeit durch eine Solldrehzahl (Drehzahlsollwert) gegeben ist, der obere Geschwindigkeitsbereich durch einen oberen Drehzahlbereich gegeben ist und der Grundgeschwindigkeitsbereich durch einen Grunddrehzahlbereich gegeben ist. Ferner ist die Nenngeschwindigkeit bevorzugt durch eine Nenndrehzahl gegeben. Die Geschwindigkeitserfassungseinheit ist vorzugsweise durch eine Drehzahlerfassungseinheit gegeben, mittels welcher die aktuelle Drehzahl des Läufers ermittelbar ist. Bevorzugt ist die Geschwindigkeitsvergleichseinheit durch eine Drehzahlvergleichseinheit gegeben, mittels welcher eine Drehzahlabweichung der aktuellen Drehzahl von der Solldrehzahl ermittelbar ist. Die Geschwindigkeitsabweichung ist somit durch eine Drehzahlabweichung gegeben. Bevorzugt entspricht die Belastung des Läufers einem von dem Läufer abgegebenen Drehmoment und/oder einer von dem Läufer abgegebenen mechanischen Leistung.

Gemäß einer Weiterbildung ist eine Stromsteuereinheit vorgesehen, mittels welcher ein oder mehrere dem Elektromotor, insbesondere dem Ständer und/oder dem Läufer, zugeführte elektrische Motorströme steuerbar oder regelbar sind. Bevorzugt ist die Stromsteuereinheit durch die Regeleinheit und/oder durch die Feldschwächungseinheit steuerbar. Insbesondere sind der oder die Motorströme mittels der Stromsteuereinheit in Abhängigkeit von einem, wenigstens einem, zwei oder mehreren Stromsollwerten steuerbar oder regelbar. Der oder die Stromsollwerte umfassen oder bilden vorzugsweise einen Querstromsollwert und/oder einen Längsstromsollwert. Vorzugsweise ist der Querstromsollwert von der Regeleinheit erzeugbar und/oder steuerbar. Bevorzugt ist der Längsstromsollwert von der Feldschwächungseinheit erzeugbar und/oder steuerbar. Bei dem Querstromsollwert handelt es sich vorteilhaft um den Sollwert eines Querstroms. Bei dem Längsstromsollwert handelt es sich bevorzugt um den Sollwert eines Längsstroms. Der Längsstrom kann den oder einen der Motorströme oder eine Rechengröße bilden, auf Basis welcher insbesondere der, zumindest einer der, mehrere der oder die Motorströme, vorzugsweise mittels der Stromsteuereinheit, steuerbar oder regelbar sind. Ferner kann der Querstrom den oder einen der Motorströme oder eine Rechengröße bilden, auf Basis welcher insbesondere der, zumindest einer der, mehrere der oder die Motorströme, vorzugsweise mittels der Stromsteuereinheit, steuerbar oder regelbar sind.

Der oder die Motorströme umfassen oder bilden bevorzugt einen oder mehrere Gleichströme und/oder einen oder mehrere Wechselströme. Beispielsweise handelt es sich bei dem Querstrom um den Anker- oder Läuferstrom des Elektromotors und bei dem Längsstrom um den Ständerstrom oder den Erregerstrom des Elektromotors, insbesondere wenn der Elektromotor ein Gleichstrommotor ist. Vorteilhaft umfassen oder bilden der oder die Motorströme einen mehrphasigen Strom oder mehrphasige Ströme, insbesondere Drehstrom oder Drehströme. Bevorzugt ist mittels der Stromsteuereinheit der dem Elektromotor, insbesondere dem Ständer, zugeführte Drehstrom unter Durchführung einer feldorientierten Regelung in Abhängigkeit von den Stromsollwerten, insbesondere in Abhängigkeit von dem Querstromsollwert und dem Längsstromsollwert, steuerbar oder regelbar. In diesem Fall handelt es sich bei dem Querstrom vorzugsweise um den aus der feldorientierten Regelung (Vektorregelung) von Drehstrommotoren bekannten q-Strom und bei dem Längsstrom um den aus der feldorientierten Regelung von Drehstrommotoren bekannten d-Strom, sodass die vorgenannten Stromsollwerte Sollwerte der d- und q-Ströme bilden, wobei der Querstromsollwert insbesondere dem Sollwert des q-Stroms und der Längsstromsollwert insbesondere dem Sollwert des d-Stroms entspricht. Der Querstrom und der Längsstrom sind vorzugsweise läuferflussbezogene und/oder luftspaltflussbezogene und/oder erregerflussbezogene Ströme. Insbesondere handelt es sich bei dem Querstromsollwert und bei dem Längsstromsollwert um läuferflussbezogene und/oder luftspaltflussbezogene und/oder erregerflussbezogene Stromsollwerte.

Vorteilhaft ist im Teillastbetrieb des Elektromotors mittels der Feldschwächungseinheit der Längsstromsollwert im Grundgeschwindigkeitsbereich in Abhängigkeit von der aktuellen Belastung des Läufers, insbesondere in Abhängigkeit von dem aktuell von dem Läufer abgegebenen Drehmoment und/oder von der aktuell von dem Läufer abgegebenen Kraft und/oder von der aktuell von dem Läufer abgegebenen mechanischen Leistung, erzeugbar und/oder steuerbar.

Der Querstrom kennzeichnet und/oder bestimmt insbesondere das von dem Läufer abgegebene Drehmoment und/oder die von dem Läufer abgegebene Kraft und kann z.B. auch als drehmomentgebender und/oder kraftgebender Strom oder Querstrom oder als Wirkstrom bezeichnet werden. Entsprechend kann der Querstromsollwert z.B. als drehmomentgebender und/oder kraftgebender Stromsollwert oder Querstromsollwert oder als Wirkstromsollwert bezeichnet werden. Bevorzugt kennzeichnet und/oder bestimmt der Längsstrom das Feld und/oder die Magnetisierung. Der Längsstrom kennzeichnet und/oder bestimmt insbesondere den Läuferfluss und/oder den Luftspaltfluss und/oder den Erregerfluss des Elektromotors und kann z.B. auch als feldgebender Strom oder Längsstrom und/oder als Magnetisierungsstrom und/oder als Erregerstrom bezeichnet werden. Entsprechend kann der Längsstromsollwert z.B. als feldgebender Stromsollwert oder Längsstromsollwert und/oder als Magnetisierungsstromsollwert und/oder als Erregerstromsollwert bezeichnet werden. Bevorzugt ist durch eine Reduzierung des Längsstroms und/oder des Längsstromsollwerts eine Feldschwächung herbeiführbar, insbesondere mittels der Feldschwächungseinheit und/oder der Stromsteuereinheit. Eine solche Reduzierung des Längsstroms und/oder des Längsstromsollwerts erfolgt beispielsweise ausgehend von oder im Vergleich zu einem vorgegebenen, maximalen Längsstrom und/oder von einem vorgegebenen maximalen Längsstromsollwert.

Gemäß einer Weiterbildung umfasst die Stromsteuereinheit eine Stromistwerteinheit, mittels welcher der oder die aktuell fließenden Motorströme messbar und/oder ein, wenigstens ein, zwei oder mehrere Stromistwerte erzeugbar sind, die insbesondere Informationen über den oder die aktuell fließenden Motorströme tragen. Der oder die Stromistwerte können reale Ströme oder Rechengrößen sein. Bevorzugt umfasst die Stromsteuereinheit eine Strommesseinheit, mittels welcher insbesondere der oder die Motorströme messbar und diese charakterisierende Motorstrom-Messwerte erzeugbar sind. Der oder die Stromistwerte bilden z.B. die Motorstrom-Messwerte oder sind mittels der Stromistwerteinheit auf Basis der Motorstrom-Messwerte erzeugbar, beispielsweise unter Durchführung wenigstens einer Transformation, wie z.B. einer Carke-Transformation mit anschließender Park-Transformation. Handelt es sich bei dem Motorstrom um einen Drehstrom, können mittels der Messeinheit z.B. die Strangströme aller Phasen des Drehstroms gemessen werden. Umfasst der Drehstrom m Phasen, werden bevorzugt jedoch lediglich m-1 Strangströme gemessen. Dies ist möglich, da sich im normalen Betrieb des Elektromotors die m Strangströme geometrisch zu Null addieren, sodass sich der nicht gemessene Strangstrom aus den gemessenen m-1 Strangströmen ermitteln lässt. Vorzugsweise umfasst der Drehstrom drei Phasen, sodass m=3 gilt.

Der oder die Stromistwerte umfassen oder bilden bevorzugt einen Längsstromistwert und/oder einen Querstromistwert. Bei dem Längsstromistwert handelt es sich insbesondere um den Istwert des Längsstroms. Bei dem Querstromistwert handelt es sich insbesondere um den Istwert des Querstroms. Bevorzugt sind mittels der Stromistwerteinheit auf Basis des oder der aktuell fließenden Motorströme und/oder der Motorstrom-Messwerte ein oder der Längsstromistwert und/oder ein oder der Querstromistwert erzeugbar. Beispielsweise umfassen oder bilden die Motorstrom-Messwerte den Längsstromistwert und/oder den Querstromistwert. Alternativ sind die Motorstrom-Messwerte z.B. mittels der Stromistwerteinheit zu dem Längsstromistwert und/oder zu dem Querstromistwert transformierbar, vorzugsweise unter Durchführung einer Carke-Transformation mit anschließender Park-Transformation. Der Querstromistwert entspricht z.B. dem Istwert des Anker- oder Läuferstroms, insbesondere wenn der Elektromotor ein Gleichstrommotor ist. Beispielsweise entspricht der Längsstromistwert dem Istwert des Erregerstroms, insbesondere wenn der Elektromotor ein Gleichstrommotor ist. Bevorzugt entspricht der Querstromistwert aber dem aus der feldorientierten Regelung bekannten Istwert des q-Stroms. Ferner entspricht der Längsstromistwert bevorzugt dem aus der feldorientierten Regelung bekannten Istwert des d-Stroms. Vorzugsweise handelt es sich bei dem Querstromistwert und bei dem Längsstromistwert um läuferflussbezogene und/oder um luftspaltflussbezogene und/oder um erregerflussbezogene Stromistwerte.

Der Querstromistwert trägt bevorzugt Informationen über die aktuelle Belastung des Läufers, insbesondere über das aktuell vom Läufer abgegebene Drehmoment und/oder über die aktuell vom Läufer abgegebene Kraft. Vorzugsweise ist der Querstromistwert dem aktuell vom Läufer abgegebenen Drehmoment und/oder der aktuell vom Läufer abgegebenen Kraft proportional. Der Längsstromistwert trägt bevorzugt Informationen über den aktuellen Läuferfluss und/oder über den aktuellen Luftspaltfluss und/oder über den aktuellen Erregerfluss. Vorzugsweise ist der Längsstromistwert dem aktuellen Läuferfluss und/oder dem aktuellen Luftspaltfluss und/oder dem aktuellen Erregerfluss proportional. Bevorzugt ist der Querstromistwert der Feldschwächungseinheit zuführbar. Hierdurch erhält die Feldschwächungseinheit Informationen über die aktuelle Belastung des Läufers, insbesondere über das aktuell vom Läufer abgegebene Drehmoment und/oder über die aktuell vom Läufer abgegebene Kraft. Der Querstromistwert kann z.B. als drehmomentgebender und/oder kraftgebender Stromistwert oder Querstromistwert oder als Wirkstromistwert bezeichnet werden. Ferner kann der Längsstromistwert z.B. als feldgebender Stromistwert oder Längsstromistwert und/oder als Magnetisierungsstromistwert und/oder als Erregerstromistwert bezeichnet werden.

Gemäß einer Weiterbildung umfasst die Stromistwerteinheit eine erste Transformationseinheit, mittels welcher die Motorstrom-Messwerte in den Längsstromistwert und/oder in den Querstromistwert transformierbar sind. Dies gilt insbesondere im Falle einer feldorientierten Regelung und/oder im Falle von Drehstrom.

Vorteilhaft ist mittels der Feldschwächungseinheit unter Auswertung des Querstromistwerts und der aktuellen Geschwindigkeit ein Leistungsistwert erzeugbar, der Informationen über die aktuell vom Läufer abgegebene mechanische Leistung trägt. Somit stehen der Feldschwächungseinheit Informationen über die aktuell vom Läufer abgegebene mechanische Leistung zur Verfügung.

Gemäß einer Weiterbildung ist im Teillastbetrieb des Elektromotors mittels der Feldschwächungseinheit der Längsstromsollwert im Grundgeschwindigkeitsbereich in Abhängigkeit vom Querstromistwert erzeugbar und/oder steuerbar. Vorzugsweise ist im Teillastbetrieb des Elektromotors der Längsstromsollwert im Grundgeschwindigkeitsbereich mittels der Feldschwächungseinheit in Abhängigkeit vom Querstromistwert reduzierbar, insbesondere ausgehend von oder im Vergleich zu einem oder dem vorgegeben maximalen Längsstromsollwert. Wird der Längsstromsollwert mittels der Feldschwächungseinheit reduziert, verringert die Stromsteuereinheit bevorzugt den Längsstrom und führt somit eine Feldschwächung herbei. Dadurch, dass der Längsstromsollwert mittels der Feldschwächungseinheit in Abhängigkeit vom Querstromistwert erzeugbar und/oder steuerbar ist, ist eine lastabhängige Steuerung und/oder Regelung der Feldschwächung möglich. Vorzugsweise ist im Teillastbetrieb des Elektromotors mittels der Feldschwächungseinheit der Längsstromsollwert im Grundgeschwindigkeitsbereich in proportionaler Abhängigkeit zum Querstromistwert haltbar und/oder proportional zum Querstromistwert steuerbar. Es ist aber auch möglich, mittels der Feldschwächungseinheit andere funktionelle Abhängigkeiten zwischen dem Längsstromsollwert und dem Querstromistwert zu realisieren. Im Volllastbetrieb des Elektromotors ist mittels der Feldschwächungseinheit der Längsstromsollwert im Grundgeschwindigkeitsbereich bevorzugt auf den maximalen Längsstromsollwert einstellbar. Bei herkömmlichen feldorientierten Regelungen wird der Längsstromsollwert im Grundgeschwindigkeitsbereich hingegen dauerhaft auf den maximalen Längsstromsollwert festgelegt.

Gemäß einer Weiterbildung ist im Teillastbetrieb des Elektromotors mittels der Feldschwächungseinheit der Längsstromsollwert im Grundgeschwindigkeitsbereich in Abhängigkeit von dem Querstromistwert und von der Geschwindigkeitsabweichung erzeugbar und/oder steuerbar. Somit lassen sich sowohl der Längsstromsollwert als auch der Querstromsollwert in Abhängigkeit von der Geschwindigkeitsabweichung erzeugen und/oder steuern. Bevorzugt bilden die Regeleinheit und die Feldschwächungseinheit somit gemeinsam eine Geschwindigkeitsregelung. Im Falle eines relativ zu dem Ständer drehbaren oder drehenden Läufers bildet diese Geschwindigkeitsregelung insbesondere eine Drehzahlregelung.

Gemäß einer Ausgestaltung weist die Stromsteuereinheit eine Querstromvergleichseinheit auf, mittels welcher eine Querstromabweichung des Querstromistwerts von dem Querstromsollwert ermittelbar ist, vorzugsweise durch Subtraktion des Querstromistwerts von dem Querstromsollwert oder umgekehrt. Bevorzugt umfasst die Stromsteuereinheit einen Querstromregler, mittels welchem in Abhängigkeit von der Querstromabweichung ein Querstromsteuerwert erzeugbar ist. Vorteilhaft weist die Stromsteuereinheit eine Längsstromvergleichseinheit auf, mittels welcher eine Längsstromabweichung des Längsstromistwerts von dem Längsstromsollwert ermittelbar ist, vorzugsweise durch Subtraktion des Längsstromistwerts von dem Längsstromsollwert oder umgekehrt. Bevorzugt umfasst die Stromsteuereinheit einen Längsstromregler, mittels welchem in Abhängigkeit von der Längsstromabweichung ein Längsstromsteuerwert erzeugbar ist. Vorzugsweise weist die Stromsteuereinheit eine oder wenigstens eine Steuersatzeinheit auf, mittels welcher auf Basis des Querstromsteuerwerts und des Längsstromsteuerwerts Schaltsignale erzeugbar sind. Bevorzugt weist die Stromsteuereinheit eine oder wenigstens eine Schalteinheit auf, mittels welcher der oder die Motorströme in Abhängigkeit von den Schaltsignalen erzeugbar und/oder steuerbar oder regelbar sind, insbesondere unter Reduzierung der Stromabweichungen (Querstromabweichung, Längsstromabweichung). Vorzugsweise ist der Motorstrom oder sind die Motorströme mittels der oder der wenigstens einen Schalteinheit an den Elektromotor, insbesondere an den Ständer und/oder an den Läufer, abgebbar. Mittels der oder der wenigstens einen Schalteinheit sind beispielsweise der Anker- oder Läuferstrom und/oder der Erregerstrom erzeugbar und/oder steuerbar oder regelbar, insbesondere wenn es sich bei dem Elektromotor um einen Gleichstrommotor handelt. Vorzugsweise ist mittels der oder der wenigstens einen Schalteinheit der Drehstrom erzeugbar und/oder steuerbar oder regelbar, insbesondere wenn es sich bei dem Elektromotor um einen Drehstrommotor handelt.

Gemäß einer Weiterbildung weist die Steuersatzeinheit eine zweite Transformationseinheit, mittels welcher der Querstromsteuerwert und der Längsstromsteuerwert in ständerbezogene Stromsteuerwerte transformierbar sind, und eine Raumzeigermodulationseinheit auf, mittels welcher die ständerbezogenen Stromsteuerwerte in die Schaltsignale umformbar sind. Dies gilt insbesondere im Falle einer feldorientierten Regelung und/oder im Falle von Drehstrom.

Mittels des Querstromreglers ist bevorzugt der Querstrom in Abhängigkeit von der Querstromabweichung steuerbar oder regelbar. Der Querstromregler umfasst oder bildet insbesondere einen PI-Regler. Mittels des Längsstromreglers ist bevorzugt der Längsstrom in Abhängigkeit von der Längsstromabweichung steuerbar oder regelbar. Der Längsstromregler umfasst oder bildet insbesondere einen PI-Regler.

Mittels der ersten Transformationseinheit ist bevorzugt eine Clarke-Transformation mit anschließender Park-Transformation durchführbar. Das Wort "anschließend" ist insbesondere schematisch zu verstehen, da es möglich ist, eine Clarke-Transformation mit anschließender Park-Transformation in einer einzigen Transformationsmatrix zusammenzufassen. Mittels der Clarke-Transformation werden die Motorstrom-Messwerte in zwei ständerbezogene Ströme transformiert. Mittels der Park-Transformation werden die beiden ständerbezogenen Ströme in zwei läuferflussbezogene und/oder luftspaltflussbezogene Ströme, vorzugsweise in den Querstromistwert und in den Längsstromistwert, transformiert.

Für die Park-Transformation ist insbesondere der aktuelle Drehwinkel des Läuferflusses und/oder des Luftspaltflusses erforderlich. Vorzugsweise sind mittels der ersten Transformationseinheit die Motorstrom-Messwerte unter Verwendung des aktuellen Läuferflusswinkels und/oder des aktuellen Luftspaltflusswinkels in den Längsstromistwert und in den Querstromistwert transformierbar.

Bevorzugt ist eine Flussmodell-Einheit vorgesehen, mittels welcher der aktuelle Läuferflusswinkel und/oder der aktuelle Luftspaltflusswinkel bestimmbar und/oder abschätzbar ist. Der Läuferflusswinkel und/oder der Luftspaltflusswinkel kann insbesondere aus dem Querstromistwert und/oder aus dem Längsstromistwert und/oder aus der Läuferdrehzahl und/oder aus dem Drehwinkel des Läufers und/oder aus den Motorstrom-Messwerten ermittelt oder abgeschätzt werden. Bevorzugt ist der aktuelle Läuferflusswinkel mittels der Flussmodell-Einheit auf Basis des Querstromistwerts, des Längsstromistwerts und der Läuferdrehzahl bestimmbar oder abschätzbar. Alternativ ist z.B. der aktuelle Luftspaltflusswinkel mittels der Flussmodell-Einheit auf Basis der Motorstrom-Messwerte bestimmbar oder abschätzbar. Der ersten Transformationseinheit ist bevorzugt der aktuelle Läuferflusswinkel und/oder der aktuelle Luftspaltflusswinkel zuführbar, insbesondere mittels der Flussmodell-Einheit.

Mittels der zweiten Transformationseinheit ist bevorzugt eine inverse Park-Transformation durchführbar. Somit sind die läuferflussbezogenen und/oder luftspaltflussbezogenen Stromsteuerwerte (Querstromsteuerwert, Längsstromsteuerwert) in die ständerbezogenen Stromsteuerwerte transformierbar. Insbesondere ist für die inverse Park-Transformation der aktuelle Läuferflusswinkel und/oder der aktuelle Luftspaltflusswinkel erforderlich. Bevorzugt ist der zweiten Transformationseinheit der aktuelle Läuferflusswinkel und/oder der aktuelle Luftspaltflusswinkel zuführbar, insbesondere mittels der Flussmodell-Einheit. Vorteilhaft sind mittels der zweiten Transformationseinheit der Querstromsteuerwert und der Längsstromsteuerwert unter Verwendung des aktuellen Läuferflusswinkels und/oder des aktuellen Luftspaltflusswinkels in die ständerbezogenen Stromsteuerwerte transformierbar.

Mittels der Raumzeigermodulationseinheit ist bevorzugt die Schalteinheit steuerbar. Insbesondere ist die Schalteinheit mittels der Schaltsignale ansteuerbar, sodass von der Schalteinheit der Motorstrom oder die Motorströme in Abhängigkeit von den Schaltsignalen erzeugbar und/oder steuerbar sind. Die oder die wenigstens eine Schalteinheit umfasst bevorzugt Schaltelemente, insbesondere in Form von Leistungshalbleitern, wie z.B. Transistoren und/oder Thyristoren. Beispielsweise ist die oder die wenigstens eine Schalteinheit als Brückenschaltung ausgebildet, mittels welcher, insbesondere durch Ansteuerung der Schaltelemente mit den Schaltsignalen, der Motorstrom oder die Motorströme, insbesondere als dreiphasiger Drehstrom, erzeugbar und/oder steuerbar ist.

Gemäß einer Ausgestaltung ist mittels der Feldschwächungseinheit der Längsstromsollwert im oberen Geschwindigkeitsbereich in Abhängigkeit von der Geschwindigkeit erzeugbar und/oder steuerbar. Vorteilhaft ist mittels der Feldschwächungseinheit der Längsstromsollwert im oberen Geschwindigkeitsbereich in umgekehrt proportionaler Abhängigkeit zur Geschwindigkeit haltbar und/oder umgekehrt proportional zur Geschwindigkeit steuerbar. Der Längsstromsollwert wird somit mit zunehmender Geschwindigkeit reduziert, was z.B. einer herkömmlichen Feldschwächung entspricht. Eine derartige Feldschwächung ist insbesondere dann erforderlich, wenn z.B. bei einem als Drehstrommotor ausgebildeten Elektromotor das Spannungs-Frequenzverhältnis der an dem Ständer anliegenden Spannung nicht eingehalten werden kann oder wenn z.B. bei einem Gleichstrommotor die Anker- oder Läuferspannung nicht erhöht werden kann. Die Feldschwächung ermöglicht in diesem Fall dennoch eine Erhöhung der Geschwindigkeit, wobei aber insbesondere das maximal vom Läufer abgebbare Drehmoment und/oder die maximal vom Läufer abgebbare Kraft und/oder die maximal vom Läufer abgebbare mechanische Leistung herabgesetzt sind.

Bevorzugt ist der Querstromsteuerwert der Feldschwächungseinheit zuführbar, mittels welcher im oberen Geschwindigkeitsbereich bevorzugt eine Feldschwächung, insbesondere eine Reduzierung des Längsstromsollwerts, zusätzlich in Abhängigkeit vom Querstromsteuerwert herbeiführbar ist. Der Querstromsteuerwert trägt vorzugsweise Informationen über das von der Regeleinheit oder Geschwindigkeitsregelung und/oder von der Stromsteuereinheit angestrebte Drehmoment des Läufers oder über die von der Regeleinheit oder Geschwindigkeitsregelung und/oder von der Stromsteuereinheit angestrebte Kraft des Läufers.

Gemäß einer Weiterbildung ist ein Querstromsteuerwertbegrenzer vorgesehen, mittels welchem der Querstromsteuerwert auf einen maximalen Querstromsteuerwert begrenzbar ist. Eine solche Begrenzung kann z.B. vorgesehen sein, um einen Wind-up-Effekt bei der Regeleinheit und/oder bei dem Querstromregler zu vermeiden. Bevorzugt ist der maximale Querstromsteuerwert der Feldschwächungseinheit zuführbar. Insbesondere ist mittels der Feldschwächungseinheit der Querstromsteuerwert mit dem maximalen Querstromsteuerwert vergleichbar. Die Feldschwächungseinheit erhält somit insbesondere Informationen darüber, ob das von der Regeleinheit oder Geschwindigkeitsregelung und/oder von der Stromsteuereinheit angestrebte Drehmoment ein maximales Drehmoment ist oder ob die von der Regeleinheit oder Geschwindigkeitsregelung und/oder von der Stromsteuereinheit angestrebte Kraft eine maximale Kraft ist. Bevorzugt ist mittels der Feldschwächungseinheit im oberen Geschwindigkeitsbereich die Feldschwächung, insbesondere eine Reduzierung des Längsstromsollwerts, zusätzlich in Abhängigkeit vom maximalen Querstromsteuerwert herbeiführbar.

Vorzugsweise ist ein Längsstromsteuerwertbegrenzer vorgesehen, mittels welchem der Längsstromsteuerwert auf einen maximalen Längsstromsteuerwert begrenzbar ist. Hierdurch kann z.B. ein Wind-up-Effekt bei dem Längsstromregler vermieden werden.

Gemäß einer Ausgestaltung umfasst die Feldschwächungseinheit zwei Untereinheiten, wobei die Feldschwächung im oberen Geschwindigkeitsbereich bevorzugt mittels einer ersten der Untereinheiten und im Grundgeschwindigkeitsbereich, insbesondere im Teillastbetrieb des Elektromotors, bevorzugt mittels einer zweiten der Untereinheiten herbeiführbar ist. Vorzugsweise ist von jeder der Untereinheiten im jeweiligen Geschwindigkeitsbereich der Längsstromsollwert oder ein diesen repräsentierender Längsstromreferenzwert erzeugbar und/oder steuerbar. Der Längsstromreferenzwert kann z.B. als feldgebender Stromreferenzwert oder Längsstromreferenzwert und/oder als Magnetisierungsstromreferenzwert und/oder als Erregerstromreferenzwert bezeichnet werden. Bei dem Längsstromreferenzwert handelt es sich vorzugsweise um einen Referenzwert des Längsstroms.

Bevorzugt sind der ersten Untereinheit die aktuelle Geschwindigkeit und/oder der Querstromsteuerwert und/oder der maximale Querstromsteuerwert zuführbar. Vorzugsweise ist mittels der ersten Untereinheit, insbesondere auf Basis der aktuellen Geschwindigkeit und/oder des Querstromsteuerwerts und/oder des maximalen Querstromsteuerwerts, ein oder der Längsstromreferenzwert erzeugbar und/oder steuerbar, welcher im oberen Geschwindigkeitsbereich bevorzugt als Längsstromsollwert der Stromsteuereinheit, insbesondere der Längsstromvergleichseinheit, zuführbar ist. Im Grundgeschwindigkeitsbereich entspricht der Längsstromreferenzwert bevorzugt dem maximalen Längsstromsollwert. Die erste Untereinheit ist z.B. durch eine herkömmliche Feldschwächungseinheit gebildet.

Bevorzugt sind der zweiten Untereinheit der Längsstromreferenzwert und/oder die aktuelle Geschwindigkeit und/oder die Geschwindigkeitsabweichung und/oder der Querstromistwert zuführbar. Vorzugsweise ist mittels der zweiten Untereinheit, insbesondere auf Basis des Längsstromreferenzwerts und/oder der aktuellen Geschwindigkeit und/oder der Geschwindigkeitsabweichung und/oder dem Querstromistwert, der Längsstromsollwert erzeugbar und/oder steuerbar, welcher, bevorzugt im Grundgeschwindigkeitsbereich, vorzugsweise im Teillastbetrieb des Elektromotors, der Stromsteuereinheit, insbesondere der Längsstromvergleichseinheit, zuführbar ist. Im oberen Geschwindigkeitsbereich ist mittels der zweiten Untereinheit bevorzugt der Längsstromreferenzwert als Längsstromsollwert der Stromsteuereinheit, insbesondere der Längsstromvergleichseinheit, zuführbar. Die zweite Untereinheit kann auch als Stromspareinheit bezeichnet werden.

Bevorzugt ist, insbesondere im Grundgeschwindigkeitsbereich, vorteilhaft im Teillastbetrieb des Elektromotors, der von der zweiten Untereinheit erzeugbare Längsstromsollwert, vorzugsweise direkt, an die Stromsteuereinheit, insbesondere an die Längsstromvergleichseinheit, abgebbar. Bevorzugt ist, insbesondere im oberen Geschwindigkeitsbereich, der von der ersten Untereinheit erzeugbare Längsstromreferenzwert unter Zwischenschaltung und/oder unter Vermittlung der zweiten Untereinheit als Längsstromsollwert an die Stromsteuereinheit, insbesondere an die Längsstromvergleichseinheit, abgebbar. Bevorzugt sind die beiden Untereinheiten in Reihe geschaltet, wobei die zweite Untereinheit insbesondere der ersten Untereinheit nachgeschaltet ist.

Durch das Vorsehen von zwei in Reihe geschalteten Untereinheiten ist es auf einfache Weise möglich, eine herkömmliche oder bestehende Steuerungsvorrichtung oder einen herkömmlichen oder bestehenden Steuerungsvorrichtungsentwurf um die erfindungsgemäße lastabhängige Feldschwächung im Teillastbetrieb des Elektromotors im Grundgeschwindigkeitsbereich zu erweitern.

Gemäß einer Weiterbildung ist eine Positionssteuereinheit vorgesehen, mittels welcher die Lage oder Position des Läufers steuerbar oder regelbar ist. Bei einem relativ zu dem Ständer drehbaren oder drehenden Läufer entspricht die Lage des Läufers insbesondere einer Drehlage oder einem Drehwinkel des Läufers (Läuferwinkel). Bevorzugt ist mittels der Positionssteuereinheit in Abhängigkeit von einem Positionssollwert und der aktuellen Lage des Läufers die Sollgeschwindigkeit erzeugbar und/oder steuerbar und vorzugsweise der Regeleinheit, insbesondere der Geschwindigkeitsvergleichseinheit, zuführbar. Vorteilhaft ist der Positionssollwert vorgegeben. Bevorzugt ist eine übergeordnete Steuerung vorgesehen, mittels welcher der Positionssollwert erzeugbar und/oder vorgebbar und insbesondere der Positionssteuereinheit zuführbar ist.

Bevorzugt ist eine Positionserfassungseinheit vorgesehen, mittels welcher die aktuelle Position oder Lage des Läufers ermittelbar ist. Z.B. umfasst die Positionserfassungseinheit einen Lagesensor, beispielsweise in Form eines Drehgebers, mittels welchem die aktuelle Lage des Läufers erfassbar ist, oder einen auf einem mathematischen Modell basierenden Positionsestimator, mittels welchem die aktuelle Lage des Läufers abschätzbar ist. Die aktuelle Lage des Läufers ist insbesondere der Positionssteuereinheit zuführbar, vorzugsweise mittels der Positionserfassungseinheit. Die Positionserfassungseinheit kann separat von der Geschwindigkeitserfassungseinheit vorgesehen oder kombiniert mit dieser ausgebildet sein.

Gemäß einer Weiterbildung ist der Elektromotor, insbesondere der Läufer, mechanisch mit einem oder wenigstens einem Rotorblatt einer Windkraftanlage gekoppelt. Das Rotorblatt ist bevorzugt an einer Rotornabe eines Rotors der Windkraftanlage drehbar gelagert und mittels des Elektromotors um seine Längsachse relativ zu der Rotornabe drehbar. Insbesondere umfasst die Windkraftanlage eine Windkraftanlagensteuerung, welche bevorzugt die übergeordnete Steuerung bildet. Vorzugsweise ist der Rotor, insbesondere durch Wind, um eine Rotorachse drehbar. Die Längsachse des Rotorblatts verläuft vorteilhaft quer oder im Wesentlichen quer zur Rotorachse.

Die Erfindung betrifft ferner ein Verfahren zum Steuern eines einen Ständer und einen relativ zu diesem bewegbaren Läufer umfassenden Elektromotors, dessen Läufergeschwindigkeit in Abhängigkeit von einer Sollgeschwindigkeit geregelt wird, wobei in einem oberen Geschwindigkeitsbereich eine Feldschwächung in Abhängigkeit von der aktuellen Geschwindigkeit herbeigeführt wird, und wobei im Teillastbetrieb des Elektromotors in einem unter dem oberen Geschwindigkeitsbereich liegenden Grundgeschwindigkeitsbereich eine Feldschwächung in Abhängigkeit von einer aktuellen Belastung des Läufers herbeigeführt wird.

Das Verfahren wird bevorzugt mit der erfindungsgemäßen Steuerungsvorrichtung durchgeführt. Insbesondere kann das Verfahren gemäß allen im Zusammenhang mit der Steuerungsvorrichtung erläuterten Ausgestaltungen weitergebildet sein. Ferner kann die Steuerungsvorrichtung gemäß allen im Zusammenhang mit dem Verfahren erläuterten Ausgestaltungen weitergebildet sein.

Die Geschwindigkeit wird bevorzugt durch die oder eine Regeleinheit geregelt, die insbesondere den oder einen Geschwindigkeitsregler umfasst.

Zur Herbeiführung der Feldschwächung wird insbesondere der magnetische Läuferfluss und/oder der magnetische Luftspaltfluss und/oder der magnetische Erregerfluss des Elektromotors reduziert.

Die Feldschwächung wird im oberen Geschwindigkeitsbereich vorteilhaft mit zunehmender Geschwindigkeit des Läufers verstärkt. Insbesondere wird der Läuferfluss und/oder der Luftspaltfluss und/oder der Erregerfluss im oberen Geschwindigkeitsbereich umgekehrt proportional zur Geschwindigkeit des Läufers gehalten und/oder umgekehrt proportional zur Geschwindigkeit des Läufers gesteuert.

Bevorzugt wird die aktuelle Geschwindigkeit des Läufers ermittelt, insbesondere gemessen, erfasst oder abgeschätzt, z.B. durch die oder eine Geschwindigkeitserfassungseinheit. Insbesondere wird eine Geschwindigkeitsabweichung der aktuellen Geschwindigkeit von der Sollgeschwindigkeit ermittelt, vorzugsweise durch Subtraktion der aktuellen Geschwindigkeit von der Sollgeschwindigkeit oder umgekehrt. Die Sollgeschwindigkeit ist insbesondere vorgegeben.

Gemäß einer Ausgestaltung ist der Läufer relativ zu dem Ständer drehbar, wobei die Geschwindigkeit durch eine Drehzahl gegeben ist, die Sollgeschwindigkeit durch eine Solldrehzahl (Drehzahlsollwert) gegeben ist, der obere Geschwindigkeitsbereich durch einen oberen Drehzahlbereich gegeben ist und der Grundgeschwindigkeitsbereich durch einen Grunddrehzahlbereich gegeben ist. Bevorzugt ist die Geschwindigkeitsabweichung durch eine Drehzahlabweichung gegeben. Vorteilhaft entspricht die Belastung des Läufers einem von dem Läufer abgegebenen Drehmoment und/oder einer von dem Läufer abgegebenen mechanischen Leistung.

Gemäß einer Weiterbildung werden ein oder mehrere dem Elektromotor, insbesondere dem Ständer und/oder dem Läufer, zugeführte elektrische Motorströme gesteuert oder geregelt. Insbesondere werden der oder die Motorströme in Abhängigkeit von einem, wenigstens einem, zwei oder mehreren Stromsollwerten gesteuert oder geregelt. Der oder die Stromsollwerte umfassen oder bilden vorzugsweise einen Querstromsollwert und/oder einen Längsstromsollwert. Der Querstromsollwert wird bevorzugt in Abhängigkeit von der Geschwindigkeitsabweichung erzeugt und/oder gesteuert.

Insbesondere wird der Querstromsollwert durch den Geschwindigkeitsregler oder durch die Regeleinheit erzeugt und/oder gesteuert. Der Längsstromsollwert wird bevorzugt durch eine Feldschwächungseinheit erzeugt und/oder gesteuert. Insbesondere wird im Teillastbetrieb des Elektromotors der Längsstromsollwert im Grundgeschwindigkeitsbereich in Abhängigkeit von der aktuellen Belastung des Läufers, insbesondere in Abhängigkeit von dem aktuell von dem Läufer abgegebenen Drehmoment und/oder von der aktuell von dem Läufer abgegebenen Kraft und/oder von der aktuell von dem Läufer abgegebenen mechanischen Leistung, erzeugt und/oder gesteuert. Dies erfolgt bevorzugt durch die Feldschwächungseinheit.

Der oder die Motorströme umfassen oder bilden z.B. wenigstens einen Gleichstrom und/oder wenigstens einen Wechselstrom. Vorteilhaft umfassen oder bilden der Motorstrom oder die Motorströmen einen mehrphasigen Strom oder mehrphasige Ströme, insbesondere Drehstrom oder Drehströme.

Bevorzugt wird der dem Elektromotor, vorteilhaft dem Ständer, zugeführte Motorstrom, der insbesondere ein Drehstrom ist, unter Durchführung einer feldorientierten Regelung in Abhängigkeit von den beiden Stromsollwerten, vorzugsweise in Abhängigkeit von dem Querstromsollwert und dem Längsstromsollwert, gesteuert oder geregelt.

Insbesondere werden der oder die aktuell fließenden Motorströme gemessen und/oder den oder die Motorströme charakterisierende Motorstrom-Messwerte erzeugt, vorzugsweise durch eine oder die Strommesseinheit. Vorteilhaft werden Stromistwerte erzeugt, die insbesondere Informationen über den oder die aktuell fließenden Motorströme tragen. Die Stromistwerte können reale Ströme oder Rechengrößen sein. Vorzugsweise werden die Stromistwerte durch eine oder die Stromistwerteinheit erzeugt. Die Stromistwerte bilden z.B. die Motorstrom-Messwerte oder werden auf Basis der Motorstrom-Messwerte erzeugt, beispielsweise unter Durchführung wenigstens einer Transformation, wie z.B. einer Carke-Transformation mit anschließender Park-Transformation. Handelt es sich bei dem Motorstrom um einen Drehstrom, werden beispielsweise die Strangströme aller Phasen des Drehstroms gemessen. Bevorzugt werden jedoch lediglich m-1 Strangströme gemessen, wenn der Drehstrom m Phasen umfasst.

Die Stromistwerte umfassen oder bilden bevorzugt einen Längsstromistwert und/oder einen Querstromistwert. Bevorzugt werden auf Basis des oder der aktuell fließenden Motorströme und/oder der Motorstrom-Messwerte ein oder der Längsstromistwert und/oder ein oder der Querstromistwert erzeugt. Beispielsweise umfassen oder bilden die Motorstrom-Messwerte den Längsstromistwert und/oder den Querstromistwert. Alternativ werden die Motorstrom-Messwerte z.B. zu dem Längsstromistwert und/oder zu dem Querstromistwert transformiert, vorzugsweise unter Durchführung einer Carke-Transformation mit anschließender Park-Transformation.

Bevorzugt wird im Teillastbetrieb des Elektromotors der Längsstromsollwert im Grundgeschwindigkeitsbereich in Abhängigkeit vom Querstromistwert gesteuert. Insbesondere wird im Teillastbetrieb des Elektromotors der Längsstromsollwert im Grundgeschwindigkeitsbereich in proportionaler Abhängigkeit zum Querstromistwert gehalten und/oder proportional zu diesem gesteuert. Es können aber auch andere funktionelle Abhängigkeiten zwischen dem Längsstromsollwert und dem Querstromistwert realisiert werden. Im Volllastbetrieb des Elektromotors wird der Längsstromsollwert im Grundgeschwindigkeitsbereich bevorzugt auf einen oder den maximalen Längsstromsollwert eingestellt.

Vorzugsweise wird im Teillastbetrieb des Elektromotors der Längsstromsollwert im Grundgeschwindigkeitsbereich in Abhängigkeit vom Querstromistwert und von der Geschwindigkeitsabweichung gesteuert.

Bevorzugt wird im Teillastbetrieb des Elektromotors der Längsstromsollwert im Grundgeschwindigkeitsbereich zusätzlich in Abhängigkeit von der Geschwindigkeit gesteuert. Vorteilhaft wird aus dem Querstromistwert und der aktuellen Geschwindigkeit des Läufers ein die aktuell vom Läufer abgegebene mechanische Leistung repräsentierender Leistungsistwert gebildet. Vorteilhaft wird im Teillastbetrieb des Elektromotors der Längsstromsollwert im Grundgeschwindigkeitsbereich in Abhängigkeit vom Leistungsistwert gesteuert.

Gemäß einer Weiterbildung wird eine Querstromabweichung des Querstromistwerts von dem Querstromsollwertwert ermittelt, insbesondere durch Subtraktion des Querstromistwerts von dem Querstromsollwertwert oder umgekehrt. Bevorzugt wird in Abhängigkeit von der Querstromabweichung, insbesondere durch einen Querstromregler, ein Querstromsteuerwert erzeugt.

Vorteilhaft wird eine Längsstromabweichung des Längsstromistwerts von dem Längsstromsollwert ermittelt, insbesondere durch Subtraktion des Längsstromistwerts von dem Längsstromsollwert oder umgekehrt. Bevorzugt wird in Abhängigkeit von der Längsstromabweichung, insbesondere durch einen Längsstromregler, ein Längsstromsteuerwert erzeugt. Bei dem Querstromsteuerwert kann es sich um einen Anker- oder Läuferstromsteuerwert und bei dem Längsstromsteuerwert um einen Ständerstromsteuerwert oder Erregerstromsteuerwert handeln, insbesondere wenn der Elektromotor durch einen Gleichstrommotor gebildet ist. Bevorzugt handelt es sich bei dem Querstromsteuerwert und dem Längsstromsteuerwert aber um läuferflussbezogene und/oder um luftspaltflussbezogene Stromsteuerwerte, insbesondere wenn der Elektromotor ein Drehstrommotor ist. Vorteilhaft werden auf Basis des Querstromsteuerwerts und des Längsstromsteuerwerts Schaltsignale erzeugt. Bevorzugt werden der oder die Motorströme in Abhängigkeit von den Schaltsignalen, vorzugsweise durch eine oder wenigstens eine Schalteinheit, erzeugt und/oder gesteuert oder geregelt, insbesondere unter Reduzierung der Stromabweichungen (Querstromabweichung, Längsstromabweichung).

Gemäß einer Weiterbildung werden der Querstromsteuerwert und der Längsstromsteuerwert, vorzugsweise unter Durchführung einer inversen Park-Transformation, in ständerbezogene Stromsteuerwerte transformiert, die vorteilhaft unter Durchführung einer Raumzeigermodulation in die Schaltsignale umgeformt werden.

Gemäß einer Ausgestaltung wird der Längsstromsollwert im oberen Geschwindigkeitsbereich in Abhängigkeit von der Geschwindigkeit gesteuert. Bevorzugt wird der Längsstromsollwert im oberen Geschwindigkeitsbereich in umgekehrt proportionaler Abhängigkeit zur Geschwindigkeit gehalten und/oder proportional zu dieser gesteuert.

Gemäß einer Weiterbildung wird der Querstromsteuerwert auf einen maximalen Querstromsteuerwert begrenzt. Bevorzugt wird der maximale Querstromsteuerwert der Feldschwächungseinheit zugeführt. Insbesondere wird mittels der Feldschwächungseinheit der Querstromsteuerwert mit dem maximalen Querstromsteuerwert verglichen. Bevorzugt wird mittels der Feldschwächungseinheit im oberen Geschwindigkeitsbereich die Feldschwächung, insbesondere eine Reduzierung des Längsstromsollwerts, zusätzlich in Abhängigkeit vom maximalen Querstromsteuerwert herbeigeführt. Vorzugsweise wird auch der Längsstromsteuerwert auf einen maximalen Längsstromsteuerwert begrenzt.

Gemäß einer Ausgestaltung umfasst die Feldschwächungseinheit zwei Untereinheiten, wobei die Feldschwächung im oberen Geschwindigkeitsbereich bevorzugt mittels einer ersten der Untereinheiten und im Grundgeschwindigkeitsbereich, insbesondere im Teillastbetrieb des Elektromotors, bevorzugt mittels einer zweiten der Untereinheiten herbeigeführt wird. Vorzugsweise wird von jeder der Untereinheiten im jeweiligen Geschwindigkeitsbereich der Längsstromsollwert oder ein diesen repräsentierender Längsstromreferenzwert erzeugt und/oder gesteuert.

Bevorzugt werden der ersten Untereinheit die aktuelle Geschwindigkeit und/oder der Querstromsteuerwert und/oder der maximale Querstromsteuerwert zugeführt. Vorzugsweise wird mittels der ersten Untereinheit, bevorzugt auf Basis der aktuellen Geschwindigkeit und/oder des Querstromsteuerwerts und/oder des maximalen Querstromsteuerwerts, ein oder der Längsstromreferenzwert erzeugt und/oder gesteuert. Im Grundgeschwindigkeitsbereich entspricht der Längsstromreferenzwert vorzugsweise dem maximalen Längsstromsollwert.

Bevorzugt werden der zweiten Untereinheit der Längsstromreferenzwert und/oder die aktuelle Geschwindigkeit und/oder die Geschwindigkeitsabweichung und/oder der Querstromistwert zugeführt. Vorzugsweise wird mittels der zweiten Untereinheit, insbesondere auf Basis des Längsstromreferenzwerts und/oder der aktuellen Geschwindigkeit und/oder der Geschwindigkeitsabweichung und/oder dem Querstromistwert, der Längsstromsollwert erzeugt und/oder gesteuert. Im oberen Geschwindigkeitsbereich wird mittels der zweiten Untereinheit bevorzugt der Längsstromreferenzwert als Längsstromsollwert abgegeben.

Vorteilhaft wird, insbesondere im oberen Geschwindigkeitsbereich, der von der ersten Untereinheit erzeugte Längsstromreferenzwert unter Zwischenschaltung und/oder unter Vermittlung der zweiten Untereinheit als Längsstromsollwert abgegeben. Bevorzugt sind die beiden Untereinheiten in Reihe geschaltet, wobei die zweite Untereinheit insbesondere der ersten Untereinheit nachgeschaltet ist.

Gemäß einer Weiterbildung wird die Position oder Lage des Läufers gesteuert oder geregelt. Bei einem relativ zu dem Ständer drehbaren oder drehenden Läufer entspricht die Lage des Läufers insbesondere einer Drehlage oder einem Drehwinkel des Läufers (Läuferwinkel). Bevorzugt wird in Abhängigkeit von einem Positionssollwert und der aktuellen Lage des Läufers die Sollgeschwindigkeit erzeugt und/oder gesteuert. Vorteilhaft ist der Positionssollwert vorgegeben. Vorzugsweise wird der Positionssollwert durch eine übergeordnete Steuerung erzeugt und/oder vorgegeben. Bevorzugt wird die aktuelle Lage des Läufers ermittelt, insbesondere gemessen, erfasst oder abgeschätzt, z.B. durch die oder eine Positionserfassungseinheit.

Gemäß einer Weiterbildung ist der Elektromotor, insbesondere der Läufer, mechanisch mit einem oder wenigstens einem Rotorblatt einer Windkraftanlage gekoppelt. Das Rotorblatt ist bevorzugt an einer Rotornabe eines Rotors der Windkraftanlage drehbar gelagert und wird mittels des Elektromotors um seine Längsachse relativ zu der Rotornabe gedreht. Vorzugsweise wird der Rotor, insbesondere durch Wind, um eine Rotorachse gedreht. Die Längsachse des Rotorblatts verläuft vorteilhaft quer oder im Wesentlichen quer zur Rotorachse.

Gemäß einer Ausgestaltung ermöglicht die Erfindung eine Regelung des Leistungsfaktors, insbesondere unter Berücksichtigung von Motorparametern. Angepasst an den aktuellen Leistungsbedarf können der Magnetisierungsstrom (z.B. Längsstrom) und der Wirkstrom (z.B. Querstrom) parallel von der oder einer, bevorzugt übergeordneten Geschwindigkeitsregelung gesteuert werden, die vorzugsweise die Regeleinheit und die Feldschwächungseinheit umfasst oder durch diese Einheiten gebildet ist. Insbesondere kann eine fest definierte Vollaufsteuerung des Magnetisierungsstroms entfallen. Im Falle eines relativ zu dem Ständer drehbaren oder drehenden Läufers bildet die Geschwindigkeitsregelung insbesondere eine Drehzahlregelung.

Bevorzugt wird durch die Erfindung ein Zwischenweg zwischen einer Vollaufsteuerung und einem daraus resultierendem hochdynamischen Reaktionsvermögen auf Drehmoment- oder Kraftanforderungen einerseits und einem langsameren Verhalten bedingt durch direkt parallele Aufsteuerung von Magnetisierungsstrom und Wirkstrom andererseits gewählt. Eine Reduzierung des Magnetisierungsstromes erfolgt somit insbesondere in dem Bereich, in dem bei herkömmlichen Lösungen ein konstanter Magnetisierungsstrom bereitstellt wird, um eine konstante Erregung der Maschine in oder in der Nähe des Nennwertes zu erreichen.

Die Erfindung betrifft auch die Verwendung einer Feldschwächungseinheit einer Steuerungsvorrichtung mit einem einen Ständer und einen relativ zu diesem bewegbaren Läufer umfassenden Elektromotor und einer Regeleinheit, mittels welcher die Geschwindigkeit des Läufers in Abhängigkeit von einer Sollgeschwindigkeit regelbar ist, für das Herbeiführen einer Feldschwächung in Abhängigkeit von der Geschwindigkeit in einem oberen Geschwindigkeitsbereich und für das Herbeiführen einer Feldschwächung in Abhängigkeit von einer aktuellen Belastung des Läufers im Teillastbetrieb des Elektromotors in einem unter dem oberen Geschwindigkeitsbereich liegenden Grundgeschwindigkeitsbereich.

Zusätzlich betrifft die Erfindung die Verwendung der erfindungsgemäßen Steuerungsvorrichtung zur Durchführung des erfindungsgemäßen Verfahrens.

Diese Verwendungen können gemäß allen im Zusammenhang mit der erfindungsgemäßen Steuerungsvorrichtung und mit dem erfindungsgemäßen Verfahren erläuterten Ausgestaltungen weitergebildet sein.

Die Erfindung wird nachfolgend anhand einer bevorzugten Ausführungsform unter Bezugnahme auf die Zeichnung beschrieben. In der Zeichnung zeigen:
- Fig. 1: eine schematische Ansicht einer Windkraftanlage mit einer Steuerungsvorrichtung gemäß einer Ausführungsform der Erfindung und
- Fig. 2: ein schematisches Blockschaltbild der Steuerungsvorrichtung.

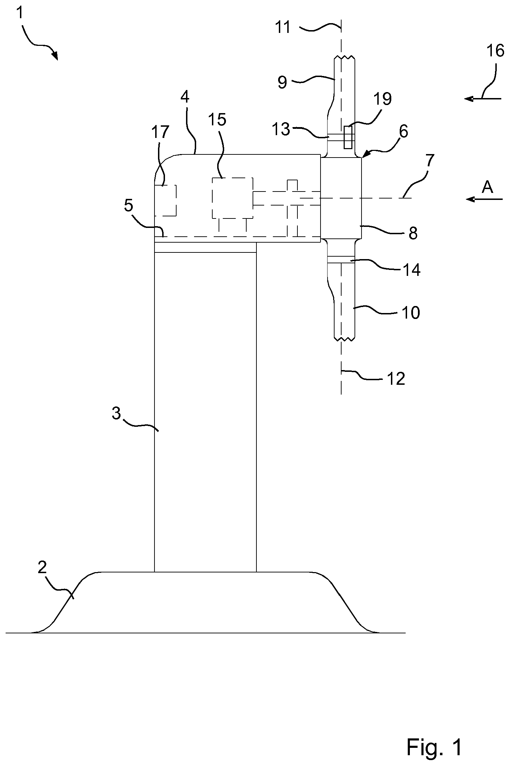

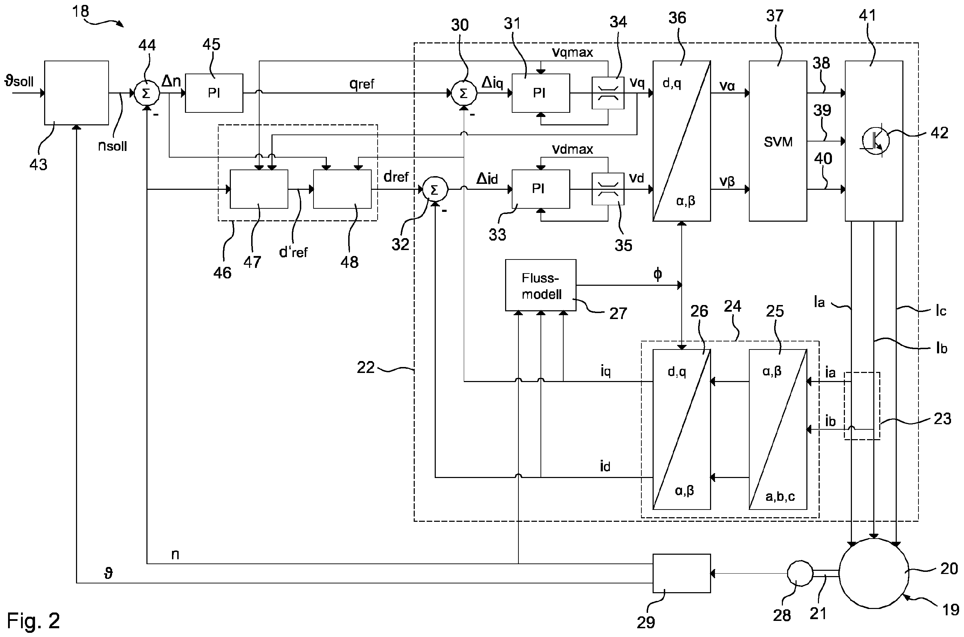

Aus Fig. 1 ist eine Windkraftanlage 1 ersichtlich, wobei ein auf einer Gründung oder einem Fundament 2 aufstehender Turm 3 an seinem dem Fundament 2 abgewandten Ende mit einem Maschinenhaus 4 verbunden ist. Das Maschinenhaus 4 umfasst einen Maschinenträger 5, an dem ein Rotor 6 um eine Rotorachse 7 drehbar gelagert ist, der eine Rotornabe 8 und damit verbundene Rotorblätter 9 und 10 aufweist, die jeweils um ihre Blattachse 11 bzw. 12 relativ zu der Rotornabe 8 drehbar sind. Jedes der Rotorblätter 9 und 10 ist mit einem Rotorblattverstellantrieb 13 bzw. 14 mechanisch gekoppelt, mittels welchem das jeweilige Rotorblatt um die zugehörige Blattachse drehbar ist. Der Rotor ist mechanisch mit einem elektrischen Generator 15 gekoppelt, der in dem Maschinenhaus 4 angeordnet und an dem Maschinenträger 5 befestigt ist. Der Rotor 6 wird durch Wind 16 um seine Rotorachse 7 gedreht, wobei die Rotationsenergie des Rotors 6 mittels des Generators 15 zumindest teilweise in elektrische Energie umgewandelt wird. Für den kontrollierten Betrieb der Windkraftanlage 1 ist eine Windkraftanlagensteuerung 17 vorgesehen, mittels welcher unter anderem die Rotorblattverstellantriebe gesteuert werden. Jeder der Rotorblattverstellantriebe weist eine Steuerungsvorrichtung 18 (siehe Fig. 2) mit einem Elektromotor 19 auf, der für den Rotorblattverstellantrieb 13 schematisch in Fig. 1 dargestellt ist.

Aus Fig. 2 ist ein schematisches Blockschaltbild der Steuerungsvorrichtung 18 des Rotorblattverstellantriebs 13 ersichtlich, wobei der Elektromotor 19 als Asynchronmaschine in Form eines Käfigläufers ausgebildet ist. Der Elektromotor umfasst einen Ständer 20 und einen Läufer 21, der hier schematisch durch eine aus dem Ständer 20 herausgeführte Motorwelle symbolisiert wird. Der Ständer 20 ist fest, insbesondere starr, mit der Rotornabe 8 verbunden, wohingegen der Läufer 21, insbesondere mittels eines Getriebes, mechanisch mit dem Rotorblatt 9 gekoppelt ist. Gemäß einer Abwandlung ist auch eine umgekehrte Anordnung möglich, wonach der Ständer 20 fest, insbesondere starr, mit dem Rotorblatt 9 verbunden und der Läufer 21, insbesondere mittels eines Getriebes, mechanisch mit der Rotornabe 8 gekoppelt ist. Durch Drehen des Läufers 21 relativ zu dem Stator 20 ist somit das Rotorblatt 9 um seine Blattachse 11 relativ zu der Rotornabe 8 drehbar.

Die Steuerungsvorrichtung 18 umfasst eine Stromsteuereinheit 22, mittels welcher ein den Ständer 20 zugeführter Drehstrom unter Durchführung einer feldorientierten Regelung regelbar ist. Der Drehstrom umfasst drei Phasen und somit drei Strangströme Ia, Ib und Ic. Zwei der Strangströme Ia und Ib werden mittels einer schematisch angedeuteten Strommesseinheit 23 gemessen, welche zwei die Strangströme charakterisierende Drehstrom-Messwerte ia und ib einer ersten Transformationseinheit 24 zuführt. Gemäß einer Abwandlung werden alle drei Strangströme Ia, Ib und Ic mittels der Strommesseinheit 23 gemessen, welche dann drei, die Strangströme charakterisierende Drehstrom-Messwerte der ersten Transformationseinheit 24 zuführt. Die erste Transformationseinheit 24 umfasst zwei Untereinheiten 25 und 26, wobei mittels der Untereinheit 25 eine Clarke-Transformation und mittels der Untereinheit 26 eine Park-Transformation durchgeführt wird. Am Ausgang der ersten Transformationseinheit 24 stehen zwei läuferflussbezogene Ströme id und iq zur Verfügung, wobei iq einen Querstromistwert und id einen Längsstromistwert repräsentiert. Die Strommesseinheit 23 und die erste Transformationseinheit 24 bilden zusammen insbesondere eine Stromistwerteinheit. Für die Park-Transformation wird ferner der aktuelle Läuferflusswinkel φ verwendet, der mittels einer Flussmodell-Einheit 27 auf Basis der aktuellen Drehzahl n sowie der läuferbezogenen Ströme iq und id abgeschätzt wird. Zum Erfassen des aktuellen Drehwinkels des Läufers (Läuferwinkel) ϑ und der aktuellen Drehzahl n des Läufers (Läuferdrehzahl) ist mit dem Läufer 21 ein Drehgeber 28 gekoppelt, der mit einer Auswerteeinheit 29 verbunden ist, welche die Drehzahl n und den Drehwinkel ϑ zur Verfügung stellt. Der Querstromistwert iq wird einer Querstromvergleichseinheit 30 zugeführt, die den Querstromistwert von einem Querstromsollwert qref subtrahiert. Die Differenz Δiq wird einem Querstromregler 31 zugeführt, der als PI-Regler ausgebildet ist und einen Querstromsteuerwert vq abgibt. Der Längsstromistwert id wird einer Längsstromvergleichseinheit 32 zugeführt, die den Längsstromistwert id von einem Längsstromsollwert dref subtrahiert und die Differenz Δid einem Längsstromregler 33 zuführt, der als PI-Regler ausgebildet ist und einen Längsstromsteuerwert vd abgibt. Die Regler 31 und 33 sind jeweils mit einem Begrenzer 34 bzw. 35 versehen, wobei der Begrenzer 34 den Querstromsteuerwert vq auf einen Maximalwert vqmax begrenzt und der Begrenzer 35 den Längsstromsteuerwert vd auf einen Maximalwert vdmax begrenzt. Die Stromsteuerwerte vq und vd werden einer zweiten Transformationseinheit 36 zugeführt, die eine inverse Park-Transformation durchführt. Dazu wird der zweiten Transformationseinheit 36 ebenfalls der Läuferflusswinkel φ von der Flussmodell-Einheit 27 zugeführt. Durch diese Transformation werden ständerbezogene Stromsteuerwerte vα und vβ gebildet, die einer Raumzeigermodulationseinheit 37 zugeführt werden. Die Raumzeigermodulationseinheit 37 bildet aus den Stromsteuerwerten vα und vβ durch Raumzeigermodulation (SVM) Schaltsignale 38, 39 und 40, die einer Schalteinheit 41 in Form einer Brückenschaltung mit Transistoren 42 zugeführt werden und diese zur Abgabe des dem Ständer 20 zugeführten Drehstroms ansteuern. Die zweite Transformationseinheit 36 und die Raumzeigermodulationseinheit 37 bilden zusammen insbesondere eine Steuersatzeinheit.

Die Steuerungsvorrichtung 18 umfasst eine Positionssteuereinheit 43, welcher der aktuelle Läuferwinkel ϑ und ein Sollwert des Läuferwinkels (Positionssollwert) ϑsoll zugeführt werden. Die Positionssteuereinheit 43 bildet aus dem Läuferwinkel ϑ und dem Positionssollwert ϑsoll eine Solldrehzahl nsoll und gibt diese an eine Drehzahlvergleichseinheit 44 ab, der auch die aktuelle Drehzahl n zugeführt wird. Die Drehzahlvergleichseinheit 44 subtrahiert die Drehzahl n von der Solldrehzahl nsoll und führt die Differenz Δn einer Drehzahlregeleinheit oder einem Drehzahlregler 45 zu, der als PI-Regler ausgebildet ist, den Querstromsollwert qref erzeugt und diesen an die Querstromvergleichseinheit 30 abgibt.

Ferner wird die aktuelle Drehzahl n einer Feldschwächungseinheit 46 zugeführt, welche eine erste Untereinheit 47 und eine zweite Untereinheit 48 umfasst. Der ersten Untereinheit 47 werden die Drehzahl n, der Querstromsteuerwert vq und der maximale Querstromsteuerwert vqmax zugeführt. Auf Basis der zugeführten Werte erzeugt die erste Untereinheit 47 einen Längsstromreferenzwert d'ref, welcher der zweiten Untereinheit 48 zugeführt wird und von dieser in einem oberen Drehzahlbereich als Längsstromsollwert dref an die Längsstromvergleichseinheit 32 abgegeben wird. Der zweiten Untereinheit 48 werden die Drehzahlabweichung Δn von der Drehzahlvergleichseinheit 44 und der Querstromistwert iq zugeführt. Vorzugsweise kann auch der zweiten Untereinheit 48 die Drehzahl n zugeführt werden. In einem unter dem oberen Drehzahlbereich liegenden Grunddrehzahlbereich erzeugt die zweite Untereinheit 48 in Abhängigkeit von der Drehzahlabweichung Δn und dem Querstromistwert iq den Längsstromsollwert dref und gibt diesen an die Längsstromvergleichseinheit 32 ab. Die zweite Untereinheit 48 bildet eine Stromspareinheit, welche den Längsstromsollwert dref im Grunddrehzahlbereich lastabhängig erzeugt. Dabei wird der Längsstromsollwert dref von der zweiten Untereinheit 48 im Volllastbetrieb des Elektromotors 19 und im Grunddrehzahlbereich auf einen Maximalwert eingestellt. Im Teillastbetrieb des Elektromotors 19 und im Grunddrehzahlbereich wird hingegen der Längsstromsollwert dref von der zweiten Untereinheit 48 in Abhängigkeit vom Querstrom iq und insbesondere auch von der Drehzahlabweichung Δn reduziert, sodass sich eine Feldschwächung ergibt. Beispielsweise wird im Teillastbetrieb des Elektromotors 19 und im Grunddrehzahlbereich der Längsstromsollwert dref von der zweiten Untereinheit 48 proportional zum Querstrom iq eingestellt. Im oberen Drehzahlbereich ist die zweite Untereinheit hingegen inaktiv und leitet lediglich den Längsstromreferenzwert d'ref von der ersten Untereinheit 47 an die Längsstromvergleichseinheit 32 als Längsstromsollwert dref weiter. Dabei wird im oberen Drehzahlbereich des Elektromotors 19 der Längsstromreferenzwert d'ref von der ersten Untereinheit 48 insbesondere umgekehrt proportional zur Drehzahl n eingestellt, was zu einer Feldschwächung führt. Im Grunddrehzahlbereich stellt die erste Untereinheit 48 den Längsstromreferenzwert d'ref bevorzugt auf den oben genannten Maximalwert des Längsstromsollwerts oder auf einen anderen Maximalwert ein.

### Bezugszeichenliste

- 1: Windkraftanlage
- 2: Fundament / Gründung
- 3: Turm
- 4: Maschinenhaus
- 5: Maschinenträger
- 6: Rotor
- 7: Rotorachse
- 8: Rotornabe
- 9: Rotorblatt
- 10: Rotorblatt
- 11: Blattachse
- 12: Blattachse
- 13: Rotorblattverstellantrieb
- 14: Rotorblattverstellantrieb
- 15: Generator
- 16: Wind
- 17: Windkraftanlagensteuerung
- 18: Steuerungsvorrichtung
- 19: Elektromotor
- 20: Ständer
- 21: Läufer / Motorwelle
- 22: Stromsteuereinheit
- 23: Strommesseinheit
- 24: erste Transformationseinheit
- 25: Untereinheit der ersten Transformationseinheit
- 26: Untereinheit der ersten Transformationseinheit
- 27: Flussmodell-Einheit
- 28: Drehgeber
- 29: Auswerteeinheit des Drehgebers
- 30: Querstromvergleichseinheit
- 31: Querstromregler
- 32: Längsstromvergleichseinheit
- 33: Längsstromregler
- 34: Begrenzer
- 35: Begrenzer
- 36: zweite Transformationseinheit
- 37: Raumzeigermodulationseinheit
- 38: Schaltsignal
- 39: Schaltsignal
- 40: Schaltsignal
- 41: Brückenschaltung
- 42: Transistoren der Brückenschaltung
- 43: Positionssteuereinheit
- 44: Drehzahlvergleichseinheit
- 45: Drehzahlregler / Drehzahlregeleinheit
- 46: Feldschwächungseinheit
- 47: Untereinheit der Feldschwächungseinheit
- 48: Untereinheit der Feldschwächungseinheit

- Ia: Strangstrom des Drehstroms
- Ib: Strangstrom des Drehstroms
- Ic: Strangstrom des Drehstroms
- ia: Messwert des Strangstroms Ia
- ib: Messwert des Strangstroms Ib
- iq: Querstromistwert
- id: Längsstromistwert
- qref: Querstromsollwert
- dref: Längsstromsollwert
- Δiq: Querstromabweichung
- Δid: Längsstromabweichung
- d'ref: Längsstromreferenzwert
- vq: Querstromsteuerwert
- vd: Längsstromsteuerwert
- vqmax: maximaler Querstromsteuerwert
- vdmax: maximaler Längsstromsteuerwert
- vα: ständerbezogener Stromsteuerwert
- vβ: ständerbezogener Stromsteuerwert
- φ: Läuferflusswinkel
- n: Läuferdrehzahl
- nsoll: Solldrehzahl
- Δn: Drehzahlabweichung
- ϑ: Drehwinkel des Läufers (Läuferwinkel)
- ϑsoll: Sollwert des Läuferwinkels

## Patentansprüche

1. Steuerungsvorrichtung mit einem einen Ständer (20) und einen relativ zu diesem bewegbaren Läufer (21) umfassenden Elektromotor (19), einer Regeleinheit (45), mittels welcher die Geschwindigkeit des Läufers (21) in Abhängigkeit von einer Sollgeschwindigkeit (nsoll) regelbar ist, einer Feldschwächungseinheit (46), mittels welcher in einem oberen Geschwindigkeitsbereich eine Feldschwächung in Abhängigkeit von der Geschwindigkeit (n) und im Teillastbetrieb des Elektromotors (19) in einem unter dem oberen Geschwindigkeitsbereich liegenden Grundgeschwindigkeitsbereich eine Feldschwächung in Abhängigkeit von einer aktuellen Belastung des Läufers (21) herbeiführbar ist, einer Stromsteuereinheit (22), mittels welcher ein oder mehrere dem Elektromotor (20) zugeführte elektrische Motorströme (Ia, Ib, Ic) in Abhängigkeit von Stromsollwerten steuerbar oder regelbar sind, die einen von der Regeleinheit (45) erzeugbaren Querstromsollwert (qref) und einen von der Feldschwächungseinheit (46) erzeugbaren Längsstromsollwert (dref) umfassen, und einer Stromistwerteinheit (23, 24), mittels welcher mehrere Stromistwerte erzeugbar sind, die Informationen über den oder die aktuell fließenden Motorströme (Ia, Ib, Ic) tragen und einen Längsstromistwert (id) und einen Querstromistwert (iq) umfassen, **dadurch gekennzeichnet, dass** die Feldschwächungseinheit (46) zwei in Reihe geschaltete Untereinheiten (47, 48) umfasst, wobei die Feldschwächung im oberen Geschwindigkeitsbereich mittels einer ersten der Untereinheiten (47) und im Teillastbetrieb des Elektromotors (19) mittels einer zweiten der Untereinheiten (48) herbeiführbar ist, die der ersten Untereinheit (47) nachgeschaltet ist, wobei mittels der zweiten Untereinheit (48) auf Basis des Querstromistwerts (iq) der Längsstromsollwert (dref) erzeugbar ist, der im Grundgeschwindigkeitsbereich der Stromsteuereinheit (22) zuführbar ist, und wobei mittels der ersten Untereinheit (47) auf Basis der aktuellen Geschwindigkeit (n) ein Längsstromreferenzwert (d'ref) erzeugbar ist, der im oberen Geschwindigkeitsbereich mittels der zweiten Untereinheit (48) als Längsstromsollwert (dref) der Stromsteuereinheit (22) zuführbar ist.

2. Steuerungsvorrichtung nach Anspruch 1, **dadurch gekennzeichnet, dass** im Teillastbetrieb des Elektromotors (19) der Längsstromsollwert (dref) im Grundgeschwindigkeitsbereich mittels der Feldschwächungseinheit (46) in Abhängigkeit von der aktuellen Belastung des Läufers (21) steuerbar ist.

3. Steuerungsvorrichtung nach Anspruch 1 oder 2, **dadurch gekennzeichnet, dass** der Längsstromsollwert (dref) der Sollwert eines feldgebenden Längsstroms ist, dessen Istwert durch den Längsstromistwert (id) gegeben ist.

4. Steuerungsvorrichtung nach einem der vorangehenden Ansprüche, **dadurch gekennzeichnet, dass** der Querstromistwert (iq) Informationen über die aktuelle Belastung des Läufers (21) trägt und der zweiten Untereinheit (48) der Feldschwächungseinheit (46) zuführbar ist.

5. Steuerungsvorrichtung nach einem der vorangehenden Ansprüche, **dadurch gekennzeichnet, dass** im Teillastbetrieb des Elektromotors (19) mittels der Feldschwächungseinheit (46) der Längsstromsollwert (dref) im Grundgeschwindigkeitsbereich in proportionaler Abhängigkeit zum Querstromistwert (iq) haltbar ist.

6. Steuerungsvorrichtung nach einem der vorangehenden Ansprüche, **gekennzeichnet durch** eine Geschwindigkeitserfassungseinheit (28, 29), mittels welcher die aktuelle Geschwindigkeit (n) des Läufers (21) ermittelbar ist, eine Geschwindigkeitsvergleichseinheit (44), mittels welcher eine Geschwindigkeitsabweichung (Δn) der aktuellen Geschwindigkeit von der Sollgeschwindigkeit (nsoll) ermittelbar ist, wobei mittels der zweiten Untereinheit (48) der Feldschwächungseinheit (46) der Längsstromsollwert (dref) auf Basis des Querstromistwerts (iq) und der Geschwindigkeitsabweichung (An) erzeugbar und/oder steuerbar ist.

7. Steuerungsvorrichtung nach einem der vorangehenden Ansprüche, **dadurch gekennzeichnet, dass** mittels der zweiten Untereinheit (48) der Feldschwächungseinheit (46) der Längsstromsollwert (dref) auf Basis des Längsstromreferenzwerts (d'ref) erzeugbar ist.

8. Steuerungsvorrichtung nach einem der vorangehenden Ansprüche, **dadurch gekennzeichnet, dass** die Stromsteuereinheit (22) eine Querstromvergleichseinheit (30), mittels welcher eine Querstromabweichung (Δiq) des Querstromistwerts (iq) von dem Querstromsollwert (qref) ermittelbar ist, und einen Querstromregler (31) aufweist, mittels welchem in Abhängigkeit von der Querstromabweichung (Δiq) ein Querstromsteuerwert (vq) erzeugbar ist, wobei mittels der ersten Untereinheit (47) der Feldschwächungseinheit (46) der Längsstromreferenzwert (d'ref) auf Basis des Querstromsteuerwerts (vq) erzeugbar und/oder steuerbar ist.

9. Steuerungsvorrichtung nach Anspruch 8, **gekennzeichnet durch** einen Querstromsteuerwertbegrenzer (34), mittels welchem der Querstromsteuerwert (vq) auf einen maximalen Querstromsteuerwert (vqmax) begrenzbar ist, wobei mittels der ersten Untereinheit (47) der Feldschwächungseinheit (46) der Längsstromreferenzwert (d'ref) auf Basis des maximalen Querstromsteuerwerts (vqmax) erzeugbar und/oder steuerbar ist.

10. Steuerungsvorrichtung nach einem der vorangehenden Ansprüche, **dadurch gekennzeichnet, dass** mittels der Feldschwächungseinheit (46) der Längsstromsollwert (dref) im oberen Geschwindigkeitsbereich in umgekehrt proportionaler Abhängigkeit zur Geschwindigkeit (n) haltbar ist.

11. Steuerungsvorrichtung nach einem der vorangehenden Ansprüche, **dadurch gekennzeichnet, dass** die aktuelle Belastung des Läufers (21) einem aktuell von dem Läufer abgegebenen Drehmoment und/oder einer aktuell von dem Läufer abgegebenen Kraft und/oder einer aktuell von dem Läufer abgegebenen mechanischen Leistung entspricht.

12. Steuerungsvorrichtung nach einem der vorangehenden Ansprüche, **dadurch gekennzeichnet, dass** der Läufer (21) relativ zu dem Ständer (20) drehbar ist, wobei die Geschwindigkeit (n) des Läufers (21) eine Winkelgeschwindigkeit ist.

13. Steuerungsvorrichtung nach einem der vorangehenden Ansprüche, **dadurch gekennzeichnet, dass** der Elektromotor (19) ein Drehstrommotor ist, wobei der Motorstrom (Ia, Ib, Ic) ein Drehstrom ist.

## Claims

1. Control device comprising an electric motor (19) with a support (20) and a rotor movable relative to the support (21), a control unit (45) by means of which the speed of the rotor (21) can be controlled as a function of the intended speed (nsoll), a field weakening unit (46) by means of which a weakening of the field can be induced as a function of the speed (n) in the upper speed range, and in part load operation of the electric motor (19) a weakening of the field can be induced as a function of the current load of the rotor (21) in a basic speed range lying below the upper speed range, a current control unit (22) by means of which one or more electrical motor currents (Ia, Ib, Ic) fed to the electric motor (20) can be controlled or regulated as a function of the current target value, which encompass a cross current target value (qref) producible by the control unit (45) and a longitudinal current target value (dref) producible by the field weakening unit (46), and a current actual value unit (23, 24), by means of which several current actual values can be generated which carry information about the currently flowing motor current or currents (Ia, Ib, Ic) and encompass a longitudinal current actual value (id) and a cross current actual value (iq), **characterized in that** the field weakening unit (46) encompasses two series connected sub-units (47, 48), whereby weakening of the field is induced in the upper speed range by means of the first of the sub-units (47) and in part load operation of the electric motor (19) by means of the second of the sub-units (48) which is connected downstream from the first sub-unit (47), whereby the longitudinal current target value (dref) can be generated by means of the second sub-unit (48) on the basis of the cross current actual value (iq) which can be fed to the current control unit (22) in the basic speed range, and whereby a longitudinal current target value (dref) can be generated by means of the first sub-unit (47) on the basis of the current speed (n) which can be fed in the upper speed range to the current control unit (22) by means of the second sub-unit (48) as a longitudinal current target value (d'ref).

2. Control device in accordance with claim 1, **characterized in that** in part load operation of the electric motor (19) the longitudinal current target value (dref) can be controlled in the basic speed range by means of the field weakening unit (46) as a function of the current load of the rotor (21).

3. Control device in accordance with claim 1 or 2, **characterized in that** the longitudinal current target value (dref) is the target value of a field-forming longitudinal current whose actual value is given by the longitudinal current actual value (id).

4. Control device in accordance with one of the preceding claims, **characterized in that** the cross-current actual value (iq) carries information about the current load of the rotor (21) and can be fed to the second sub-unit (48) of the field weakening unit (46).

5. Control device in accordance with one of the preceding claims, **characterized in that** in part load operation of the electric motor (19) the longitudinal current target value (dref) can be held as a proportional function of the cross current actual value (iq) by means of the field weakening unit (46) in the basic speed range.

6. Control device in accordance with one of the preceding claims, **characterized by** a speed measurement unit (28, 29), by means of which the current speed (n) of the rotor (21) can be determined, a speed comparison unit (44) by means of which a speed deviation (Δn) of the current speed from the target speed (nsoll) can be determined, whereby the longitudinal current target value (dref) can be generated and/or controlled by means of the second sub-unit (48) of the field weakening unit (46) on the basis of the cross current actual value (iq) and the speed deviation (Δn).

7. Control device in accordance with one of the preceding claims, **characterized in that** by means of the second sub-unit (48) of the field weakening unit (46) the longitudinal current target value (dref) can be generated on the basis of the longitudinal current reference value (d'ref).

8. Control device in accordance with one of the preceding claims, **characterized in that** the current control unit (22) has a cross current comparison unit (30) by means of which a cross current deviation (Δiq) of the cross current actual value (iq) from the cross current target value (qref) can be determined, and a cross current controller (31) by means of which a cross current control value (vq) can be generated as a function of the cross current deviation (Δiq), whereby the longitudinal current reference value (d'ref) can be generated and/or controlled on the basis of the cross current control value (vq) by means of the first sub-unit (47) of the field weakening unit (46).

9. Control device in accordance with claim 8, **characterized by** a cross current value limiter (34) by means of which the cross current control value (vq) can be limited to a maximum cross current control value (vqmax), whereby the longitudinal current reference value (d'ref) can be generated and/or controlled on the basis of the maximum cross current control value (vqmax) by means of the first sub-unit (47) of the field weakening unit (46).

10. Control device in accordance with one of the preceding claims, **characterized in that** the longitudinal current target value (dref) can be held in the upper speed range as a reversely proportional function of the speed (n) by means of the field weakening unit (46).

11. Control device in accordance with one of the preceding claims, **characterized in that** the current load of the rotor (21) corresponds to a torsional moment currently emitted by the rotor and/or a force currently emitted by the rotor and/or a mechanical performance currently emitted by the rotor.

12. Control device in accordance with one of the preceding claims, **characterized in that** the rotor (21) can be rotated relative to the support (20), whereby the speed (n) of the rotor (21) is an angular speed.

13. Control device in accordance with one of the preceding claims, **characterized in that** the electric motor (19) is a threephase motor, whereby the motor current (Ia, Ib, Ic) is a threephase current.

## Revendications

1. Dispositif de commande doté d'un moteur électrique (19) comprenant un stator (20) et un rotor (21) mobile par rapport à celui-ci, d'une unité de réglage (45), permettant de régler la vitesse du rotor (21) en fonction d'une vitesse théorique (nsoll), d'une unité de shuntage (46), permettant dans une plage de vitesse supérieure de générer un shuntage en fonction de la vitesse (n) et, lors d'un fonctionnement en charge partielle du moteur électrique (19) dans une plage de vitesse de base inférieure à la plage de vitesse supérieure, de générer un shuntage en fonction d'une charge actuelle du rotor (21), d'une unité de contrôle de courant (22) permettant de commander ou de régler un ou plusieurs courants de moteur électrique (Ia, Ib, Ic) fournis au moteur électrique (20) en fonction des valeurs théoriques de courant qui comprennent une valeur théorique de composante transversale de courant d'induit (qref) pouvant être générée par l'unité de réglage (45) et une valeur théorique de composante longitudinale de courant d'induit (dref) pouvant être générée par l'unité de shuntage (46), et d'une unité de valeur réelle de courant (23, 24), permettant de générer plusieurs valeurs réelles de courant, qui véhiculent des informations sur le ou les courants de moteur (Ia, Ib, Ic) actuellement en circulation et comprennent une valeur réelle de composante longitudinale de courant d'induit (id) et une valeur réelle de composante transversale de courant d'induit (iq), **caractérisé en ce que** l'unité de shuntage (46) comprend deux sous-unités montées en série (47, 48), le shuntage pouvant être généré dans la plage de vitesse supérieure au moyen d'une première des sous-unités (47) et lors du fonctionnement en charge partielle du moteur électrique (19) au moyen d'une seconde des sous-unités (48), qui est connectée en aval de la première sous-unité (47), la valeur théorique de composante longitudinale de courant d'induit (dref) pouvant être générée au moyen de la seconde sous-unité (48) sur la base de la valeur réelle de composante transversale de courant d'induit (iq), laquelle valeur pouvant être fournie dans la plage de vitesse de base de l'unité de contrôle de courant (22), et une valeur de référence de composante longitudinale de courant d'induit (d'ref) pouvant être générée au moyen de la première sous-unité (47) sur la base de la vitesse actuelle (n), laquelle valeur de référence pouvant être fournie dans la plage de vitesse supérieure au moyen de la seconde sous-unité (48) en tant que valeur théorique de composante longitudinale de courant d'induit (dref) de l'unité de contrôle de courant (22).

2. Dispositif de commande selon la revendication 1, **caractérisé en ce que**, lors du fonctionnement en charge partielle du moteur électrique (19), la valeur théorique de composante longitudinale de courant d'induit (dref) peut être commandée dans la plage de vitesse de base au moyen de l'unité de shuntage (46) en fonction de la charge actuelle du rotor (21).

3. Dispositif de commande selon la revendication 1 ou 2, **caractérisé en ce que** la valeur théorique de composante longitudinale de courant d'induit (dref) est la valeur théorique d'une composante longitudinale du courant d'induit indiquant un champ, dont la valeur réelle est indiquée par la valeur réelle de la composante longitudinale du courant d'induit (id).

4. Dispositif de commande selon l'une des revendications précédentes, **caractérisé en ce que** la valeur réelle de composante transversale de courant d'induit (iq) véhicule des informations sur la charge actuelle du rotor (21) et peut être fournie à la seconde sous-unité (48) de l'unité de shuntage (46).

5. Dispositif de commande selon l'une des revendications précédentes, **caractérisé en ce que**, lors du fonctionnement en charge partielle du moteur électrique (19), la valeur théorique de composante longitudinale de courant d'induit (dref) dans la plage de vitesse de base peut être maintenue proportionnelle à la valeur réelle de composante transversale de courant d'induit (iq) au moyen de l'unité de shuntage (46).

6. Dispositif de commande selon l'une des revendications précédentes, **caractérisé par** une unité de détection de vitesse (28, 29), permettant de déterminer la vitesse actuelle (n) du rotor (21), une unité de comparaison de vitesse (44), permettant de déterminer un écart de vitesse (Δn) de la vitesse actuelle par rapport à la vitesse théorique (nsoll), la valeur théorique de composante longitudinale de courant d'induit (dref) pouvant être générée et/ou commandée au moyen de la seconde sous-unité (48) de l'unité de shuntage (46) sur la base de la valeur réelle de composante transversale de courant d'induit (iq) et de l'écart de vitesse (Δn).

7. Dispositif de commande selon l'une des revendications précédentes, **caractérisé en ce que** la valeur théorique de composante longitudinale de courant d'induit (dref) peut être générée au moyen de la seconde sous-unité (48) de l'unité de shuntage (46) sur la base de la valeur de référence de composante longitudinale de courant d'induit (d'ref).

8. Dispositif de commande selon l'une des revendications précédentes, **caractérisé en ce que** l'unité de contrôle de courant (22) présente une unité de comparaison de composante transversale de courant d'induit (30), permettant de déterminer un écart de composante transversale de courant d'induit (Δiq) de la valeur réelle de composante transversale de courant d'induit (iq) par rapport à la valeur théorique de composante transversale de courant d'induit (qref), et un régulateur de composante transversale de courant d'induit (31), permettant de générer une valeur de contrôle de composante transversale de courant d'induit (vq) en fonction de l'écart de composante transversale de courant d'induit (Δiq), la valeur de référence de composante longitudinale de courant d'induit (d'ref) pouvant être générée et/ou commandée au moyen de la première sous-unité (47) de l'unité de shuntage (46) sur la base de la valeur de contrôle de composante transversale de courant d'induit (vq).

9. Dispositif de commande selon la revendication 8, **caractérisé par** un limiteur de valeur de contrôle de composante transversale de courant d'induit (34), permettant de limiter la valeur de contrôle de composante transversale de courant d'induit (vq) à une valeur de contrôle de composante transversale de courant d'induit maximale (vqmax), la valeur de référence de composante longitudinale de courant d'induit (d'ref) pouvant être générée et/ou commandée au moyen de la première sous-unité (47) de l'unité de shuntage (46) sur la base de la valeur de contrôle de composante transversale de courant d'induit maximale (vqmax).

10. Dispositif de commande selon l'une des revendications précédentes, **caractérisé en ce que** la valeur théorique de composante longitudinale de courant d'induit (dref) dans la plage de vitesse supérieure peut être maintenue inversement proportionnelle à la vitesse (n) au moyen de l'unité de shuntage (46).

11. Dispositif de commande selon l'une des revendications précédentes, **caractérisé en ce que** la charge actuelle du rotor (21) correspond à un couple fourni actuellement par le rotor et/ou à une force fournie actuellement par le rotor et/ou à une puissance mécanique fournie actuellement par le rotor.

12. Dispositif de commande selon l'une des revendications précédentes, **caractérisé en ce que** le rotor (21) peut être mis en rotation par rapport au stator (20), la vitesse (n) du rotor (21) étant une vitesse d'angle.

13. Dispositif de commande selon l'une des revendications précédentes, **caractérisé en ce que** le moteur électrique (19) est un moteur triphasé, le courant du moteur (Ia, Ib, Ic) étant un courant triphasé.
